# EUROPÄISCHE PATENTANMELDUNG

(11) **EP 1 715 231 A1**
(43) Veröffentlichungstag der Anmeldung: **25.10.2006**
(21) Anmeldenummer: 05405303.8
(22) Anmeldetag: 20.04.2005
(51) Int. Cl.: F16K 31/50, F16K 31/60, F16K 1/50

(54) **Ventil mit einem in ein Ventilgehäuse einzusetzenden Oberteil**

(71) Anmelder: JRG Gunzenhauser AG, 4450 Sissach (CH)
(72) Erfinder: Bürli, Kurt, 4463 Buus (CH)
(74) Vertreter: Ullrich, Gerhard

(57) **Zusammenfassung**

Das für den Einbau in Wasserleitungen konzipierte Ventil hat ein in einen Ventilkörper einzusetzendes Oberteil. Der Ventilkörper oder das Oberteil besitzt ein Kopfstück **(6)** mit einem Axialdurchgang **(69).** Zunächst weist das Oberteil eine Aussenhülse **(2)** auf, die am Kopfstück **(6)** drehbar gelagert und axial fixiert ist. Weiterhin hat das Oberteil einen zwischen einem Nullhub **(H**_{**0**}**)** und einem Maximalhub **(H**_{**max**}**)** beweglichen Stössel **(4),** der im Kopfstück **(6)** und der Aussenhülse **(2)** konzentrisch axial beweglich angeordnet ist und direkt im Axialdurchgang **(69)** des Kopfstücks **(6)** geführt ist. Der Stössel **(4)** ist mit einer ersten Dichtung **(81)** versehen, welche am auf einen Ventilsitz im Ventilkörper gerichteten Ende **(47,49)** des Stössels **(4)** angeordnet ist und zur Absperrung des Ventils dient. Den Stössel **(4)** umgibt eine Hauptdichtung **(89),** welche im Kopfstück **(6)** sitzt. Ferner gehört zum Oberteil zur Betätigung des Ventils ein drehbarer Handgriff **(1).** Die Aussenhülse **(2)** ist einerseits direkt mit dem Handgriff **(1)** und andererseits direkt mit einem Mitnahmeelement **(3)** verbunden. Das Mitnahmeelement **(3)** weist äusserlich eine Aussenprofilierung (30) auf und ist axial fest am Stössel **(4)** angeordnet. Die Aussenhülse **(2)** besitzt einen in Richtung der ersten Dichtung **(81)** offenen Schaft **(24),** der innerlich eine Innenprofilierung **(27)** hat, welche mit der Aussenprofilierung **(30)** des Mitnahmeelements **(3)** radialen Formschluss hat. Das in der Aussenhülse **(2)** geführte Mitnahmeelement **(3)** ist axial verschiebbar. Am Kopfstück (6) befindet sich ein feststehendes Vorschubgewinde **(68,59').** Das Mitnahmeelement **(3)** hat ein Gewinde **(38,39),** welches mit dem Vorschubgewinde **(68,59')** in Eingriff steht. Das Mitnahmeelement **(3)** ist am Stössel **(4)** zumindest soweit radial lose angeordnet, dass bei Betätigung des Handgriffs **(1)** ab einem definierten Mindestreibwiderstand zwischen der ersten Dichtung **(81)** und dem Ventilsitz der Stössel **(4)** radial blockiert ist.

## Beschreibung

### Anwendungsgebiet der Erfindung

Die Erfindung betrifft ein Ventil mit einem Oberteil zum Einsetzen in ein Ventilgehäuse, welches zum Einbau in Wasser führende Leitungen bestimmt ist. Das Oberteil besteht im wesentlichen aus einem Kopfstück mit einer darin aufgenommenen, feststehenden Hülse, durch welche sich ein axial beweglicher Stössel erstreckt. An dem Ende des Stössels, welches im eingebauten Zustand in das Ventilgehäuse hineinragt, ist ein Ventilteller angeordnet, der eine Dichtung zur Absperrung des Ventilsitzes trägt. Zur Betätigung des Ventils ist ein mit der Hülse verbundener Handgriff vorgesehen, wobei die Hülse über ein Zwischenglied indirekt mit dem Stössel in Verbindung steht und diesen bei Drehung des Handgriffs axial verstellt. Beim Verstellen verharrt der Handgriff in unveränderlichem Abstand zum Kopfstück. Eine derartige Konstruktion besitzt einen "nicht-steigenden" Handgriff, im Gegensatz zum "steigenden" Typ, bei welchem ein verstellter Handgriff dem axial ein- bzw. ausfahrenden Stössel im veränderten Höhenniveau folgt. Die vorliegende Erfindung befasst sich mit einem Ventil der "nicht-steigenden" Gattung.

### Stand der Technik

In der AT 405 440 B wird eine Konstruktion des steigenden Typs von Ventil-Oberteilen offenbart. Das Kopfstück des Oberteils ist mittels eines Aussengewindes in einen Stutzen am Ventilgehäuse eingeschraubt. Durch das Kopfstück erstreckt sich die limitiert axial bewegliche Ventilspindel, an deren unterem Ende der Ventilteller und die Absperrdichtung befestigt sind, während auf das obere Spindelende ein Handgriff aufgesetzt ist. Zwischen Kopfstück und Ventilspindel liegen mehrere mit der Spindel geschleppte Dichtungselemente. Im oberen Bereich hat der Axialdurchgang des Kopfstücks ein Innengewinde, in dem die partiell mit einem komplementären Aussengewinde versehene Ventilspindel geführt wird. Die Dichtungselemente verhindern das Vordringen von Strömungsmedium in den Axialdurchgang, so dass auch das Spindelgewinde nicht mit dem Medium in Berührung kommt. Der Handgriff ist mit einem sich nach unten erstreckenden hohlzylindrischen Fortsatz ausgebildet, in dessen inneren Freiraum die obere Partie des Kopfstücks sukzessive mit Betätigung in Schliessrichtung einfährt, wobei der Handgriff in Relation zum Ventil "absteigt" und beim Öffnen "aufsteigen" würde. Der steigende Typ hat den grundsätzlichen Nachteil, dass bei bereits beengten Raumverhältnissen durch das beim Verstellen wandernde Handrad, der Zugriff für den Bediener weiter erschwert werden kann. Ferner liegt ― ausser in der maximalen Offenstellung ― nicht nur die untere freie Oberfläche der Ventilspindel im Medium, sondern auch das zuunterst sitzende Dichtungselement mit seiner gesamten Aussenfläche, so dass sich darauf Ablagerungen bilden, die beim Zurückfahren in Richtung Offenstellung in den Axialdurchgang eingebracht werden und die Dichtheit beeinträchtigen können.

Ein anderes Ventil-Oberteil des steigenden Typs ist aus der RU 2 100 678 bekannt. Durch das feststehende Kopfstück wird die axial verschiebbare Ventilspindel mit dem daran fixierten Ventilteller und der Absperrdichtung geführt. Am nach aussen ragenden Spindelende ist ein Handgriff in Form eines nach unten offenen U-Profils befestigt, dessen abgewinkelte Krallen in ein am Kopfstück vorhandenes grobes Gewinde eingreifen. Bei Drehung des im Aussengewinde geführten Handgriffs wird die Ventilspindel durch Mitnahme axial verstellt. Vorteilhaft hat man die Spindeldichtung weit oben im Kopfstück positioniert, wodurch diese nicht von dem Bereich der Spindeloberfläche durchfahren wird, welche dem Strömungsmedium ausgesetzt, somit verunreinigt und durch Korrosion aufgerauht ist. Bei dieser Konstruktion bedarf es keines Spindelgewindes, so dass der Nachteil eines vom Medium umspülten Spindelgewindes nicht auftritt. Abgesehen von dem nachteilig steigenden Handgriff ist bedenklich, dass in den nicht abgedichteten Totraum zwischen Spindel und Kopfstück Medium bis an die Spindeldichtung heran einströmt und dort eine verunreinigende Fäulnis entstehen kann.

Schliesslich offeriert die Firma R. Nussbaum AG, CH-4601-Olten / Schweiz, ein Schrägsitzventil PN 16, Artikel-Nr. 2200, mit einem Oberteil, das einen Handgriff des steigenden Typs aufweist. Durch das Kopfstück erstreckt sich eine zweiteilige, teleskopisch ineinander fahrende Ventilspindel, die sich in eine Spindelstange und eine Spindelhülse gliedert. An der Spindelstange sind oben ein erstes und unten ein zweites Aussengewinde vorhanden. Das Kopfstück hat an seinem oberen Ende ein Innengewinde, in dem das erste Aussengewinde der axial beweglichen Spindelstange läuft. Die Spindelstange durchragt das Innengewinde des Kopfstücks und tritt mit einem Mehrkant aus, auf den ein Handgriff aufgesetzt ist. Das zweite Aussengewinde der Spindelstange greift in ein gröberes Innengewinde in der Spindelhülse ein, wobei letztere axial beweglich, aber rotationsgesichert im Kopfstück geführt wird. Bei Betätigung des Handgriffs dreht sich die Spindelstange mit, verschiebt sich axial um einen bestimmten Weg und bewegt die in Rotationsrichtung feststehende Spindelhülse in axialer Richtung um einen linear proportional grösseren Weg, so dass der Ventilteller mit der davon getragenen Absperrdichtung sich vom Ventilsitz entfernt oder diesem annähert, um die weitere Öffnung oder das weitere Schliessen des Ventils zu bewirken. Am Austritt der Spindelhülse aus dem Kopfstück ist in einer Radialnut eine mit Lippen profilierte Spindelabdichtung angeordnet, welche die Spindelgewinde vor einem Kontakt mit dem Medium schützt. Die Absperrdichtung umfasst den Aussenrand des Ventiltellers zur Ober- und Unterseite, wodurch beim Nullhub die Oberseite der Absperrdichtung dichtend an der unteren Ringschulter des Kopfstücks anliegt. Am oberen Ende des Kopfstücks ist eine Markierung angebracht, die mit fortschreitender Stellung in Richtung des Nullhubs ― d.h. hin zur maximalen Ventilöffnung ― vom ansonsten umfassenden Handgriffkragen zunehmend sichtbar wird. Neben dem unvorteilhaft steigenden Handgriff entsteht beim Nullhub zwischen Absperrdichtung und Kopfstück ein abgeschlossener Totraum als bedenkliche Quelle für Verunreinigungen bei Verwendung in einer Trinkwasserleitung.

Die DE 197 05 982 C1 hat ein Ventil-Oberteil mit einem Handgriff des nicht-steigenden Typs zum Gegenstand. Bei Verstellung derartiger Oberteile bewirkt die sich axial bewegende Ventilspindel keine Axialverschiebung des Handgriffs. Nicht-steigende Oberteile haben den Vorteil, dass sich bei deren Betätigung infolge des nur drehenden Handgriffs, die Raumverhältnisse nicht weiter verengen können und der Zugriff nicht zusätzlich eingeengt wird. Überdies erbringt der nicht-steigende Typ den optischen Vorteil einer konstant bleibenden, stellungsunabhängigen Bauhöhe, was das Ordnungsbild besonders beim Einbau mehrerer benachbarter Ventile mit solchen Oberteilen positiv beeinflusst. Zur Erzielung der nicht-steigenden Wirkungsweise ist im feststehenden hülsenförmigen Kopfstück eine drehbare, axial fixierte Hülse mit einem Innengewinde eingesetzt, innerhalb der ein axial verschiebbarer Stössel mit einer mehrkantigen Mantelfläche sitzt. Oben auf dem Stössel befindet sich ein damit drehfest verbundener Mitnehmerring, dessen Aussengewinde mit dem Innengewinde der Hülse in Eingriff steht, wobei die Hülse fest mit dem Handgriff verbunden ist. Am unteren Ende des Stössels sind der Ventilteller und die Absperrdichtung angeordnet. Im Bereich des unteren Austritts des Stössels aus dem Kopfstück ist ein Führungsring mit zur Mantelfläche des Stössels formschlüssiger Innenkontur fest eingesetzt. Über dem Führungsring sitzt im Kopfstück eine den Stössel radial umfassende Stösseldichtung, oberhalb der ein am unteren Hülsenende anliegender Haltering mit einer zur Mantelfläche des Stössels komplementären Innenkontur eingefügt ist. Zwischen Mitnehmerring und Übergang von der Hülse zum Handgriff gibt es eine Stellungsanzeige. Ungünstig sind der zwischen dem Führungsring und der Stösseldichtung verbleibende Totraum sowie das Durchfahren der Stösseldichtung beim Verstellen von einem Bereich der Mantelfläche des Stössels, welche Mediumsablagerungen und der Korrosion durch die Berührung mit dem Medium ausgesetzt ist.

In der DE 102 25 101 A1 ist ein Ventil-Oberteil mit quasi nicht-steigender Wirkungsweise dargestellt. In dem feststehenden hülsenförmigen Kopfstück ist ein Innengewinde vorgesehen, in dem ein etwa mittig entlang des Stössels liegender, relativ kurzer Aussengewindeabschnitt geführt wird. Am oberen Stösselende befindet sich ein Zahnrad, während am unteren Stösselende der Ventilteller und die Absperrdichtung angeordnet sind. Im Bereich des unteren Austritts des Stössels aus dem Kopfstück ist ein Dichtungspaket mit O-Ringen und diese umgebende Scheiben eingesetzt. Über das Zahnrad ist ein Handgriff mit einem sich axial erstreckenden Aufnahmeraum gesteckt, der eine zum Zahnrad komplementäre Innenprofilierung aufweist. Abhängig von der Drehrichtung des Handgriffs, der über das Zahnrad den Stössel mitnimmt, ergibt sich durch die ineinander greifenden Gewinde an Stössel und Kopfstück eine axiale Verschiebung des Stössels. Adäquat zur Stösselverschiebung wandert das Zahnrad entlang der Innenprofilierung axial im Aufnahmeraum des Handgriffs. Oberhalb des Zahnrads ist ein zum Stössel koaxialer Stift vorhanden, der beim Nullhub ― d.h. bei maximaler Ventilöffnung ― durch ein im Handgriff vorhandenes Durchgangsloch ragt und somit eine sicht- und ertastbare Stellungsanzeige bildet. Im Prinzip ist dieses Oberteil von steigendem Typ, da jedoch die Axialverschiebung des aus dem Kopfstück nach oben austretenden Stössels vom Handgriff verdeckt wird, der seine axiale Position beibehält, entsteht der Eindruck nicht-steigender Wirkungsweise. Ein wesentlicher Nachteil besteht auch hier darin, dass der untere Bereich der Mantelfläche des Stössels mit dem Medium in Berührung kommt, sich somit Ablagerungen und Korrosion ausbilden und diese verunreinigte sowie aufgerauhte Fläche beim Verstellen die Stösseldichtung verschleissend durchfährt.

### Aufgabe der Erfindung

Im Bestreben nach weiterer Vervollkommnung der bisher bekannten Ventile, die auf einem nicht-steigenden Handgriff beruhen, liegt der Erfindung die Aufgabe zugrunde, eine zuverlässige, langlebige Abdichtung des Ventils zu erreichen sowie eine dauerhafte Leichtgängigkeit der Betätigungselemente zu schaffen. Insbesondere bei maximal geöffneter Stellung dürfen keine "toten" Hohlräume verbleiben, in denen sich hygienisch bedenklich Medium einlagern kann. Durch Konstruktion und Materialauswahl sind Verkalkung und Oberflächenkorrosion sowie deren negative Folgen erheblich zu verringern. Schliesslich soll die maximal geöffnete Stellung signalisiert werden. Darüber hinaus muss sich das Ventil in verschiedenen Dimensionen zu effizienten Kosten in Serie fertigen lassen.

### Übersicht über die Erfindung

Das für den Einbau in Wasserleitungen konzipierte Ventil hat ein in einen Ventilkörper einzusetzendes Oberteil. Der Ventilkörper oder das Oberteil besitzt ein Kopfstück mit einem Axialdurchgang. Zunächst weist das Oberteil eine Aussenhülse auf, die am Kopfstück drehbar gelagert und axial fixiert ist. Weiterhin hat das Oberteil einen zwischen einem Nullhub und einem Maximalhub beweglichen Stössel, der im Kopfstück und der Aussenhülse konzentrisch axial beweglich angeordnet ist und direkt im Axialdurchgang des Kopfstücks geführt ist. Der Stössel ist mit einer ersten Dichtung versehen, welche am auf einen Ventilsitz im Ventilkörper gerichteten Ende des Stössels angeordnet ist und zur Absperrung des Ventils dient. Den Stössel umgibt eine Hauptdichtung, welche im Kopfstück sitzt.

Ferner gehört zum Oberteil zur Betätigung des Ventils ein drehbarer Handgriff. Die Aussenhülse ist einerseits direkt mit dem Handgriff und andererseits direkt mit einem Mitnahmeelement verbunden. Das Mitnahmeelement weist äusserlich eine Aussenprofilierung auf und ist axial fest am Stössel angeordnet. Die Aussenhülse besitzt einen in Richtung der ersten Dichtung offenen Schaft, der innerlich eine Innenprofilierung hat, welche mit der Aussenprofilierung des Mitnahmeelements radialen Formschluss hat. Das in der Aussenhülse geführte Mitnahmeelement ist axial verschiebbar. Am Kopfstück befindet sich ein feststehendes Vorschubgewinde. Das Mitnahmeelement hat ein Gewinde, welches mit dem Vorschubgewinde in Eingriff steht. Das Mitnahmeelement am Stössel ist zumindest soweit radial lose angeordnet, dass bei Betätigung des Handgriffs ab einem definierten Mindestreibwiderstand zwischen der ersten Dichtung und dem Ventilsitz der Stössel radial blockiert ist.

Die nachfolgenden Merkmale beziehen sich auf spezielle Ausführungen der Erfindung: Das Mitnahmeelement ist von hülsenförmiger Gestalt mit einem in Richtung der ersten Dichtung offenen Schaft und besitzt andererseits Befestigungsmittel zur Verbindung mit dem Stössel. Das Gewinde am Mitnahmeelement ist innerlich als Innengewinde gestaltet und das feststehende Vorschubgewinde befindet sich direkt am Kopfstück. Alternativ ist das Gewinde am Mitnahmeelement äusserlich als Aussengewinde gestaltet und das feststehende Vorschubgewinde ist ein Innengewinde, welches sich direkt am Kopfstück oder an einer in das Kopfstück eingesetzten Zwischenhülse befindet. Die Hauptdichtung ist mit einem Innenabstand im Kopfstück mindestens soweit rückversetzt angeordnet, dass bei keiner Stellung des Stössels zwischen Null- und Maximalhub dem Strömungsmedium ausgesetzte Oberfläche des Stössels an die Hauptdichtung gelangt. In einer Ausführungsform hat das Kopfstück einen Innenstutzen, der vom Axialdurchgang durchzogen ist, als Vorschubgewinde ein Aussengewinde besitzt und von einem Aussenstutzen mit einem dazwischen liegenden radialen, sacklochförmigen Freiraum umfasst ist, der dem anteiligen Schaft des Mitnahmeelements Platz bietet. Die Hauptdichtung ist nun mit dem bestimmten Mindestinnenabstand im Innenstutzen angeordnet.

In der zur ersten Dichtung gerichteten Mündung des Kopfstücks ist eine dritte Dichtung eingesetzt, die einen langgestreckten Mittelabschnitt des herausragenden Stössels umgibt und zwischen dem Kopfstück und dem Stössel eine radiale sowie axiale Abdichtung bewirkt. Die dritte Dichtung besitzt im unbelasteten Zustand eine über die das Kopfstück abschliessende Ebene hervortretende Auswölbung, welche sich beim Nullhub mit der weitestmöglich eingefahrenen Stellung des Stössels durch die angepresste Rückseite eines die erste Dichtung tragenden Ventiltellers in die Ebene verformt, so dass zwischen der Rückseite des Ventiltellers und der abschliessenden Ebene des Kopfstücks umschlossener Totraum vermieden wird. Das Befestigungsmittel zur Verbindung des Mitnahmeelements mit dem Stössel umfasst ein sich an den Schaft anschliessenden Kragen mit einem darin zentrisch angeordneten Durchgangsloch. Im Durchgangsloch steckt ein vorzugsweise im Durchmesser verjüngter erster axialer Fortsatz des Stössels, an den sich ein zweiter axialer Fortsatz anschliesst, der axial auf dem Kragen fixiert ist, z.B. mittels eines am zweiten Fortsatz vorhandenen Aussengewindes und einer darauf geschraubten zweiten Mutter. Das Befestigungsmittel zur Verbindung des Mitnahmeelements mit dem Stössel umfasst eine Rutschkupplung ― z.B. mittels einer Tellerfeder realisiert ―, welche bei Überschreiten eines definierten Reibwiderstands zwischen der ersten Dichtung und dem Ventilsitz auskuppelt, so dass der Stössel radial blockiert verharrt.

Der Stössel schliesst am zum Handgriff weisenden Ende mit einem oberen Zapfen ab, der beim Nullhub mit der weitestmöglich eingefahrenen Stellung des Stössels in einem Durchgangsloch in der Deckfläche der Aussenhülse oder einem ersten Griffteil zu liegen kommt, vorzugsweise aus dem Durchgangsloch hervorsteht, und somit ein eingestellter Nullhub optisch und durch Abtasten wahrnehmbar ist. Der Handgriff ist mit der Aussenhülse einstückig verbunden oder an der Aussenhülse lösbar und drehfest angeordnet. Der Handgriff setzt sich aus einem ersten halbschalenartigen Griffteil und einem zweiten ebenfalls halbschalenartigen Griffteil zusammen. Zur Befestigung des zweiteiligen Handgriffs an der Aussenhülse sind zunächst an der Aussenhülse eine Aussenprofilierung, die sich am Ende des Schafts befindet, welcher an die Deckfläche anarenzt, sowie eine unterhalb der Aussenprofilierung vorhandene Radialnut vorgesehen. Das erste und zweite Griffteil hat je einen zentrischen Axialdurchgang, der jeweils von einer Innenprofilierung umrandet ist. Das erste Griffteil hat unten an der Innenprofilierung ein zirkuläres Rastorgan in Gestalt einer Ringwulst oder einzelner Rastnasen. Die Innenprofilierung des ersten Griffteils steht mit der Aussenprofilierung an der Aussenhülse in formschlüssigem Eingriff. Die Innenprofilierung des zweiten Griffteils lässt sich über die Aussenprofilierung der Aussenhülse schieben, um das zweite Griffteil auf das Niveau der Radialnut zu bringen. Zwischen beiden Griffteilen ist in die Radialnut ein zweiter Sicherungsring eingefügt, der an seinem Aussenumfang einen Überhang aufweist, welchen das Rastorgan zur axialen Sicherung des Handgriffs auf der Aussenhülse unterfasst. Die Innen- und Aussenprofilierung an der Aussenhülse sowie die Aussenprofilierung am Mitnahmeelement sind Längsverzahnungen.

In einer Ausführungsform besteht die Hauptdichtung aus einem im Paket aneinander angeordneten Bauteilen, nämlich einer fünften Dichtung, einer zweiten Scheibe, einer sechsten Dichtung und einer dritten Scheibe. Die fünfte Dichtung sitzt auf einer im Innenstutzen des Kopfstücks liegenden Ringschulter auf und gegen die dritte Scheibe ist ein erster Sicherungsring in eine innere Radialnut im Innenstutzen eingesetzt. In einer anderen Ausführungsform besteht die Hauptdichtung ebenfalls aus einem im Paket aneinander angeordneten Bauteilen, nämlich einer fünften Dichtung, einer zweiten Scheibe und einer sechsten Dichtung. Die fünfte Dichtung sitzt auf einer im Kopfstück liegenden Ringschulter auf und gegen die sechste Dichtung ist ein erster Sicherungsring auf eine innere Ringschulter im Kopfstück gesetzt.

Der Aussenstutzen des Kopfstücks setzt sich aus einem oberen Stutzen, einem daran anschliessenden, im Aussendurchmesser vergrösserten Flansch und einem an letzteren ansetzenden Zwischenstutzen einteilig zusammen. Der obere Stutzen besitzt aussen eine Aussenprofilierung, z.B. einen Sechskant zum Ansetzen eines Schraubenschlüssels, und intern ein Innengewinde zur Aufnahme der Zwischenhülse oder eines Gewinderings. Eine in das Kopfstück weisende Unterkante des Gewinderings sitzt auf einem im Aussendurchmesser verdickten Bund der Aussenhülse auf und fixiert somit die Aussenhülse im Kopfstück bei drehbarer Lagerung axial. Der Flansch ist im montierten Zustand zum Aufsetzen auf den Ventilkörper bestimmt. Der Zwischenstutzen hat ein Aussengewinde, das dem Einschrauben des Oberteils in den Ventilkörper dient. Bei Verwendung einer Zwischenhülse wird zumindest ein radial durch Öffnungen im Bund der Aussenhülse eingebrachtes Arretierelement vorgesehen, das in die Zwischenhülse axial sichernd in eine Radialnut eingreift.

Der Stössel besteht aus Chromstahl und ist über seinen langgestreckten Mittelabschnitt von rundem Querschnitt. Vom Mittelabschnitt über eine erste Radialschulter zum ersten Fortsatz, von hier über eine zweite Radialschulter zum zweiten Fortsatz und von hier über eine dritte Radialschulter zum oberen Zapfen sind die Aussendurchmesser jeweils vermindert. Der Stössel kann am zur ersten Dichtung gerichteten Ende ― im Anschluss an den Mittelabschnitt ― einen Hinterschnitt haben, dem ein nicht-rotationssymmetrisches Zwischensegment, z.B. mit Abflachungen, für die Aufnahme des Ventiltellers folgt, an das sich ein unterer Zapfen mit einem Aussengewinde zum Aufschrauben einer ersten Mutter anschliesst, wodurch der die erste Dichtung tragende Ventilteller gesichert ist. Der Ventilteller hat einen zum Querschnitt des Zwischensegments des Stössels formschlüssigen Axialdurchgang, z.B. mit Abflachungen. Der Ventilteller kann an der der ersten Dichtung zugewandten Seite eine Profilierung und eine den Axialdurchgang vergrössernde Erweiterung aufweisen, die von einem erhabenen Rand begrenzt ist. Die erste Dichtung besitzt eine dem Ventilteller zugewandte Profilierung, die mit der Profilierung am Ventilteller zusammenwirkt. Die optionale Erweiterung ist zur Aufnahme einer zweiten Dichtung bestimmt, die den Stössel umgibt.

### Kurzbeschreibung der beigefügten Zeichnungen

Es zeigen:

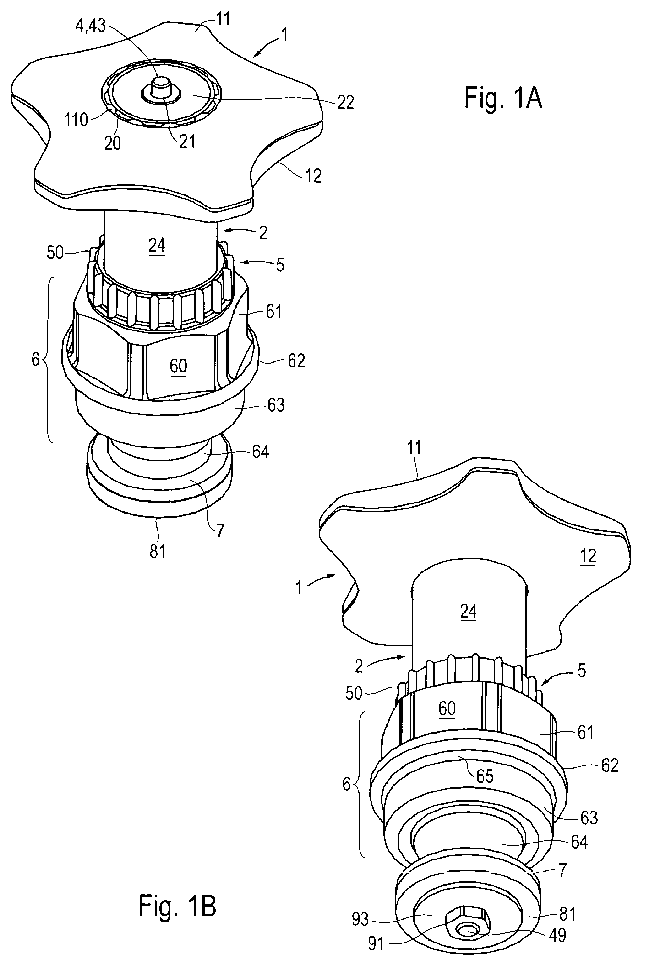

- Figur 1A: ein erfindungsgemässes Oberteil *erster Variante,* mit "Nullhub" in der Stellung "völlig offen", in Perspektivansicht;
- Figur 1B: das Oberteil gemäss Figur 1A, in gewechselter Perspektivansicht;

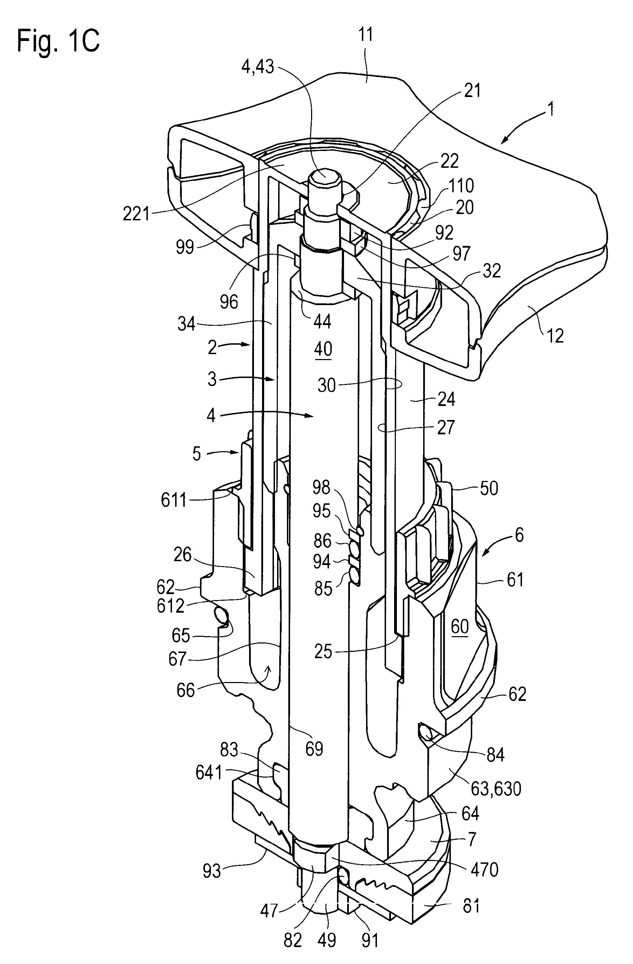

- Figur 1C: das Oberteil gemäss Figur 1A, im vertikalen, perspektivischen Teilschnitt;

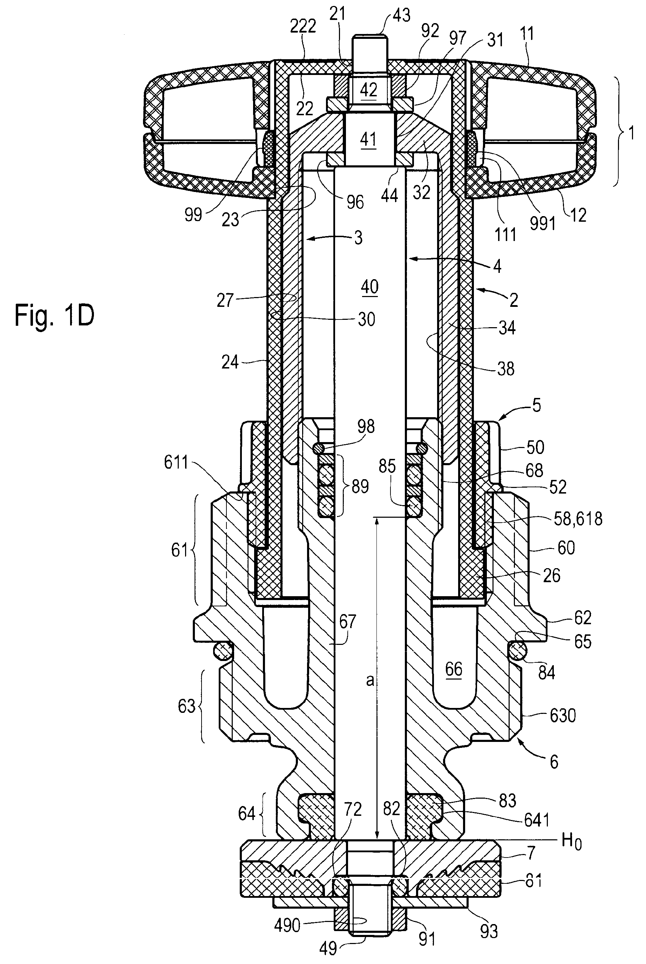

- Figur 1D: das Oberteil gemäss Figur 1A, im Vertikalschnitt;
- Figur 2: das Oberteil gemäss Figur 1A, mit "Teilhub" in der Stellung "teilweise offen", im Vertikalschnitt;

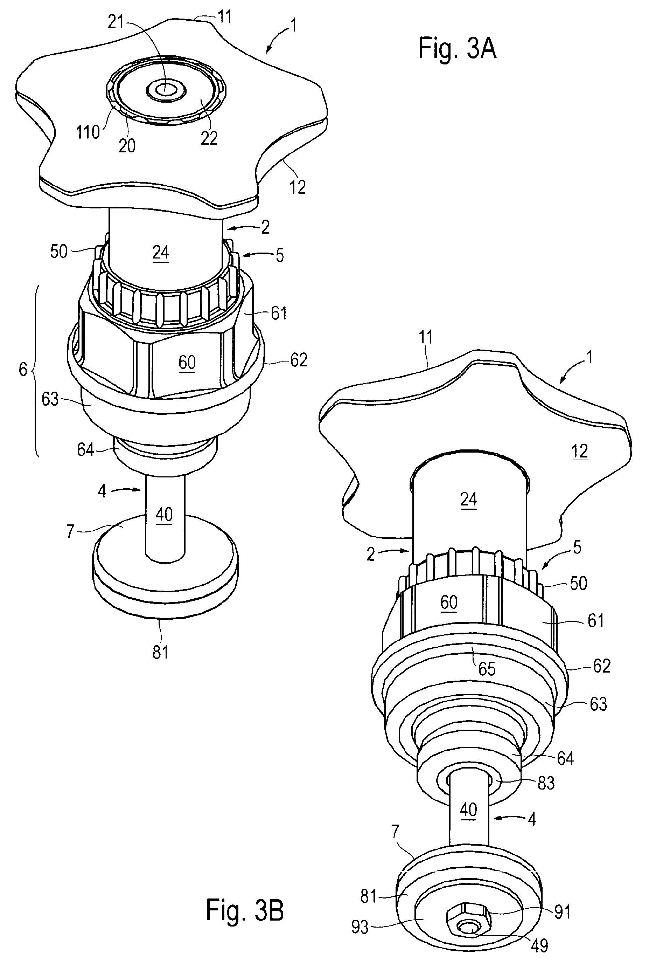

- Figur 3A: das Oberteil gemäss Figur 1A, mit "Maximalhub" in der Stellung "völlig geschlossen", in Perspektivansicht;
- Figur 3B: das Oberteil gemäss Figur 3A, in gewechselter Perspektivansicht;

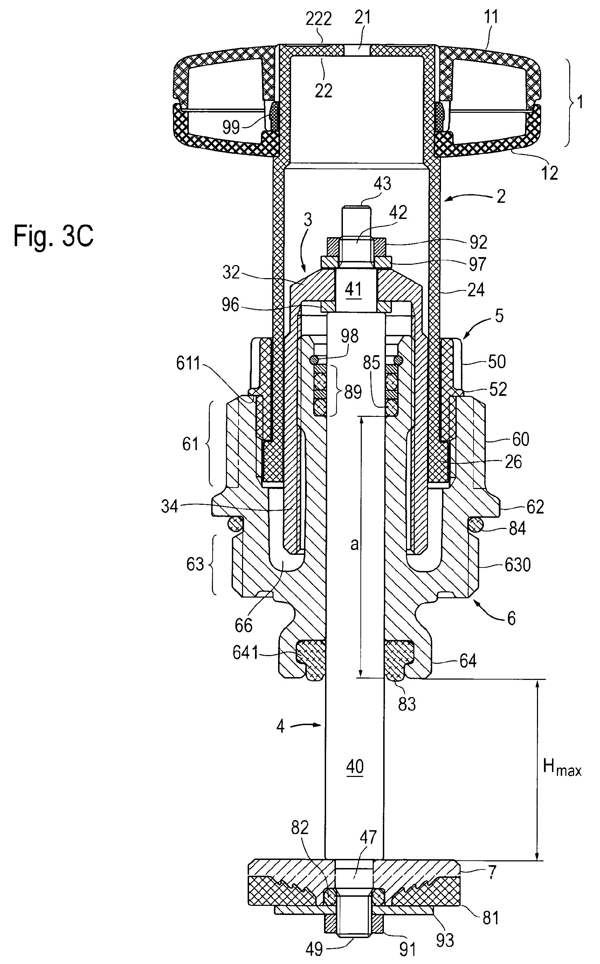

- Figur 3C: das Oberteil gemäss Figur 3A, im Vertikalschnitt;
- Figur 4: das Oberteil gemäss Figur 1A, im Vertikalschnitt als Prinzipdarstellung, mit der linken Seite in der Stellung "völlig offen" und der rechten Seite in der Stellung "völlig geschlossen";
- Figur 5A: das Oberteil gemäss Figur 1A, im perspektivischer Explosivdarstellung;
- Figur 5B: das Oberteil gemäss Figur 1A, im perspektivischen Vertikalschnitt als Explosivdarstellung;
- Figur 5C: das obere Griffteil aus Figur 5A, in vergrösserter Perspektivdarstellung;
- Figur 5D: das obere Griffteil gemäss Figur 5C, im perspektivischen Teilschnitt;
- Figur 5E: das untere Griffteil aus Figur 5A, in vergrösserter Perspektivdarstellung;
- Figur 5F: das untere Griffteil gemäss Figur 5E, im perspektivischen Teilschnitt;
- Figur 5G: die Aussenhülse aus Figur 5A, in vergrösserter Perspektivdarstellung;
- Figur 5H: die Aussenhülse gemäss Figur 5G, im perspektivischen Teilschnitt;
- Figur 5J: die Innenhülse aus Figur 5A, in vergrösserter Perspektivdarstellung;
- Figur 5K: die Innenhülse gemäss Figur 5G, im perspektivischen Teilschnitt;
- Figur 5L: den Stössel aus Figur 5A, in vergrösserter Perspektivdarstellung;
- Figur 5M: den Gewindering aus Figur 5A, in vergrösserter Perspektivdarstellung;
- Figur 5N: den Gewindering gemäss Figur 5M, im perspektivischen Teilschnitt;
- Figur 5O: das Kopfstück aus Figur 5A, in vergrösserter Perspektivdarstellung;
- Figur 5P: das Kopfstück *erster Variante* gemäss Figur 5O, im perspektivischen Teilschnitt:
- Figur 5Q: den dritten Dichtring aus Figur 5A, in vergrösserter Perspektivdarstellung;
- Figur 5R: den dritten Dichtring gemäss Figur 5Q, im perspektivischen Teilschnitt;
- Figur 5S: den Ventilteller aus Figur 5A, in vergrösserter Perspektivdarstellung;
- Figur 5T: den Ventilteller gemäss Figur 5S, im perspektivischen Teilschnitt;
- Figur 5U: den ersten Dichtring aus Figur 5A, in vergrösserter Perspektivdarstellung;
- Figur 5V: den ersten Dichtring gemäss Figur 5U, im perspektivischen Teilschnitt;
- Figur 6A: ein Oberteil *zweiter Variante*;
- Figur 6B: das Aussenstück des Kopfstücks aus Figur 6A, im vergrösserten Vertikalschnitt;
- Figur 6C: den Innenstutzen aus Figur 6A, im vergrösserten Vertikalschnitt;
- Figur 6D: die Aussenhülse aus Figur 6A, im vergrösserten Vertikalschnitt;
- Figur 6E: die Innenhülse aus Figur 6A, im vergrösserten Vertikalschnitt;
- Figur 6F: den Gewindering aus Figur 6A, im Vertikalschnitt;

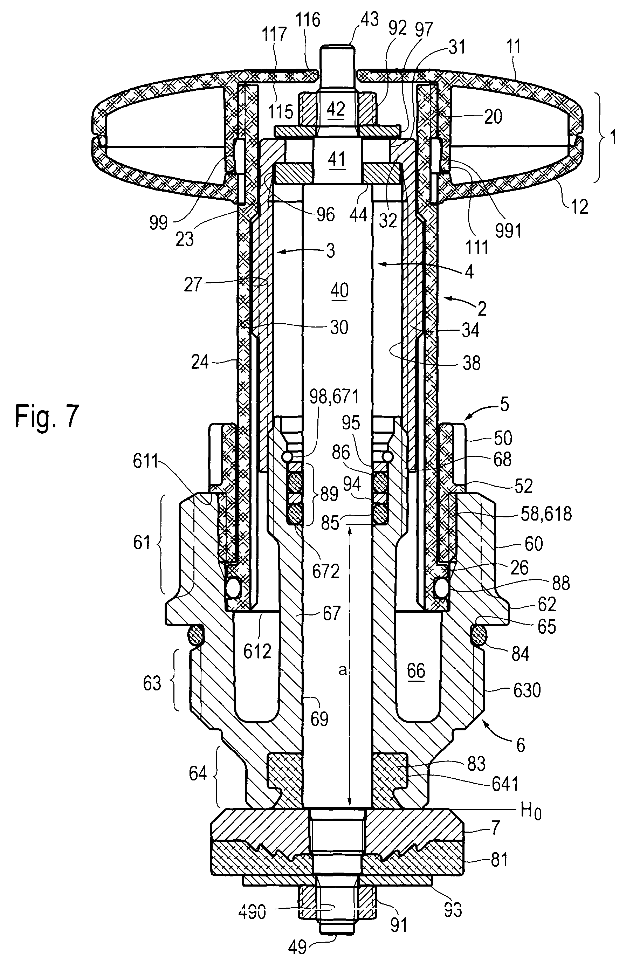

- Figur 7: ein Oberteil *dritter Variante*;

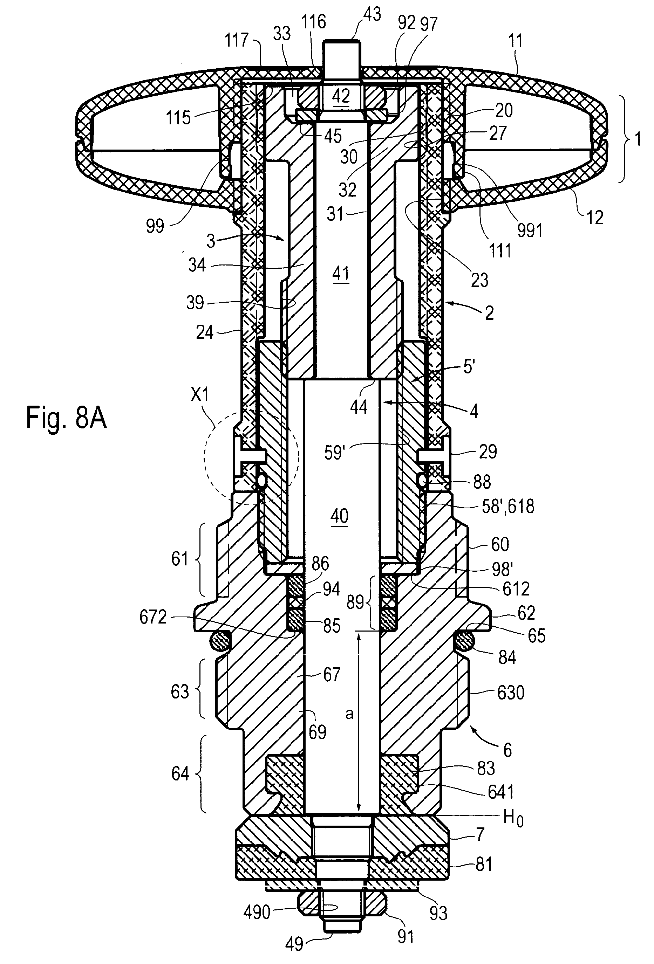

- Figur 8A: ein Oberteil *vierter Variante*; und

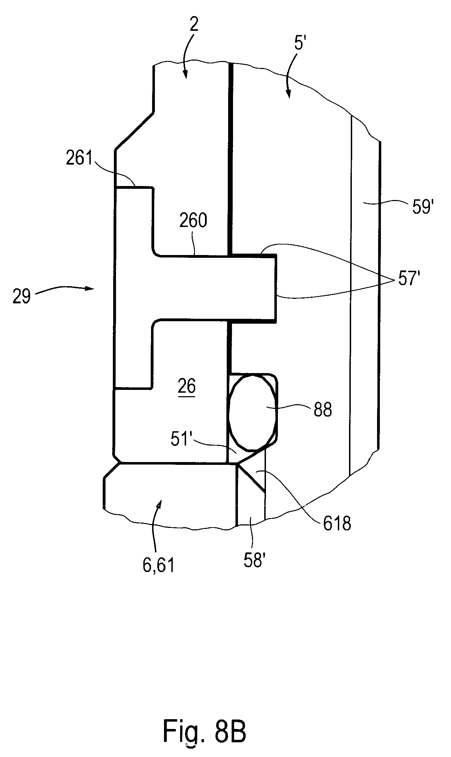

- Figur 8B: die Ausschnittsvergrösserung X1 aus Figur 8A.

### Ausführungsbeispiel

Mit Bezug auf die beiliegenden Zeichnungen erfolgt nachstehend die detaillierte Beschreibung von Ausführungsbeispielen des erfindungsgemässen Oberteils.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A bis 1D

Das Oberteil besteht prinzipiell aus einem Handgriff **1,** dessen Drehbewegung auf eine Aussenhülse **2** übertragen wird, einer darin teleskopisch aufgenommenen Innenhülse **3** ― diese wirkt als Mitnahmeelement ―, einem Stössel **4,** der die Innenhülse **3** und ein daran anschliessendes Kopfstück **6** axial durchragt. Mittels eines Gewinderings **5** wird die Aussenhülse **2** im Kopfstück **6** gehalten. Am unteren Ende des Stössels **4** ist ein Ventilteller **7** fixiert. Das Oberteil befindet sich im Nullhub **H**_{**0**} also in völlig offener Stellung mit maximal eingefahrenem Stössel **4.**

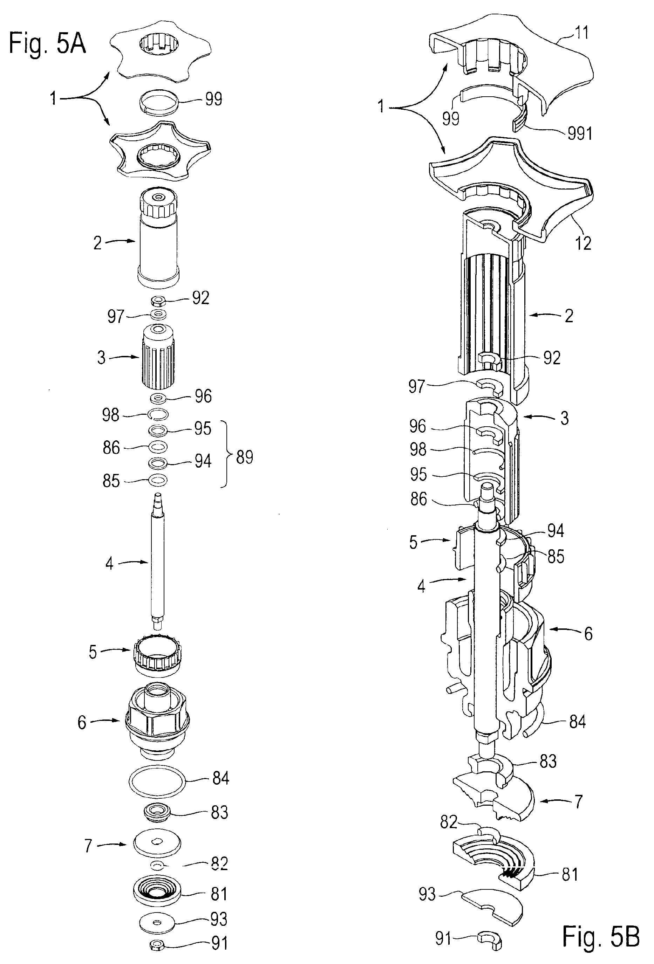

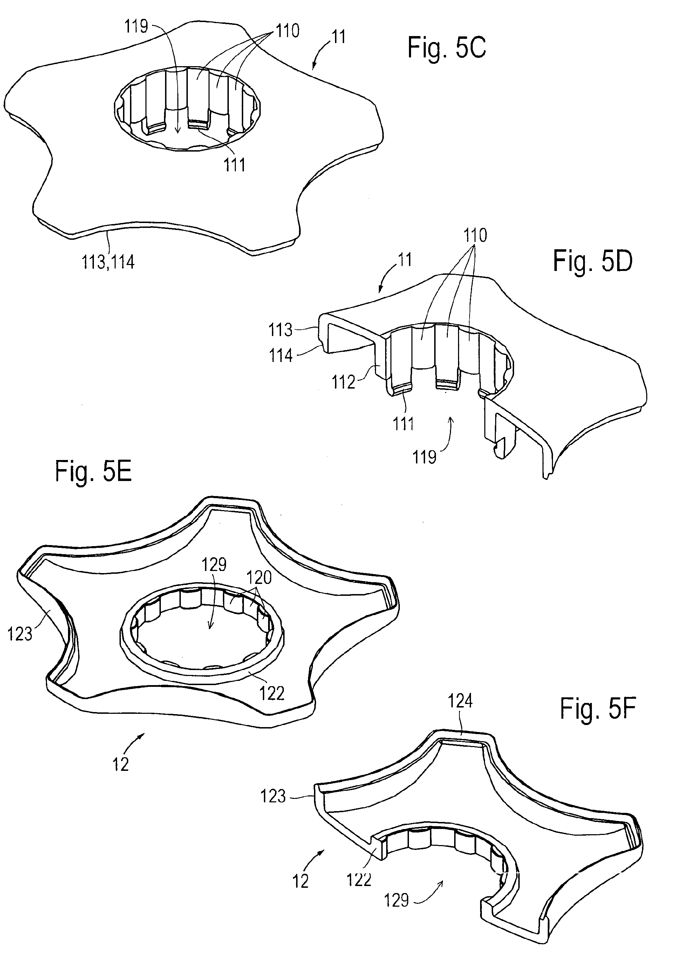

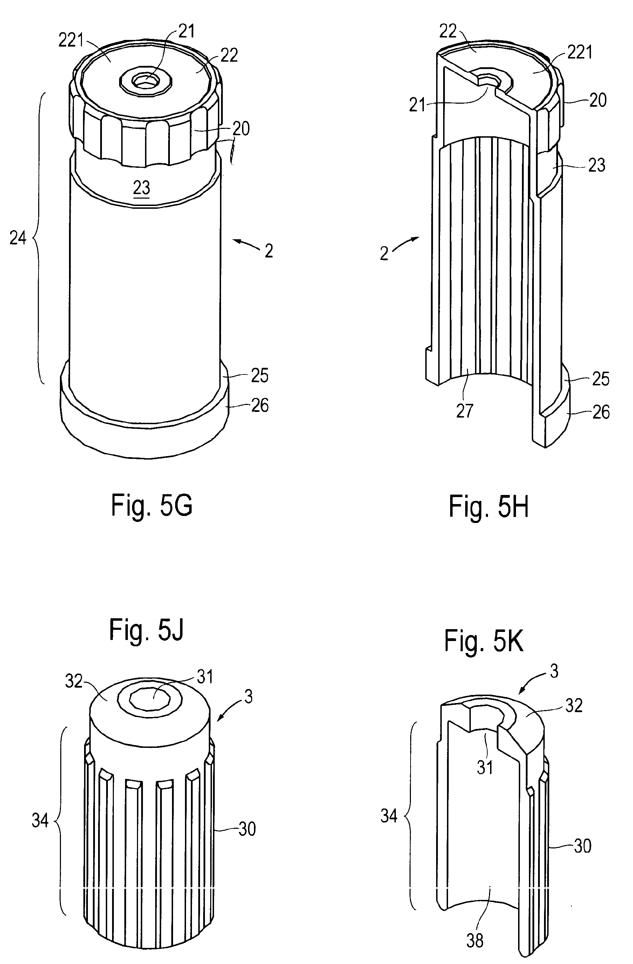

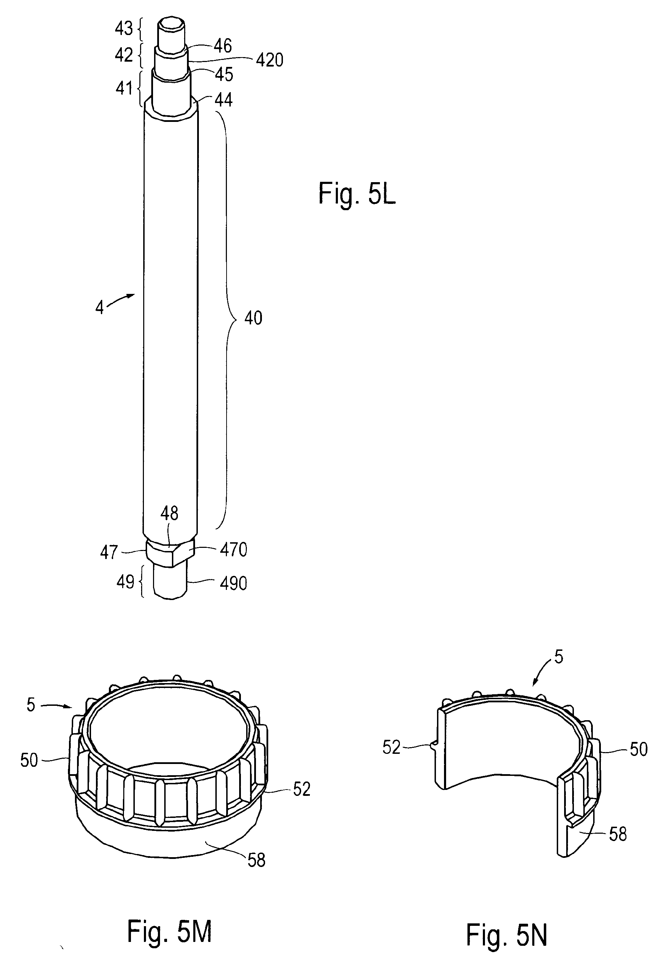

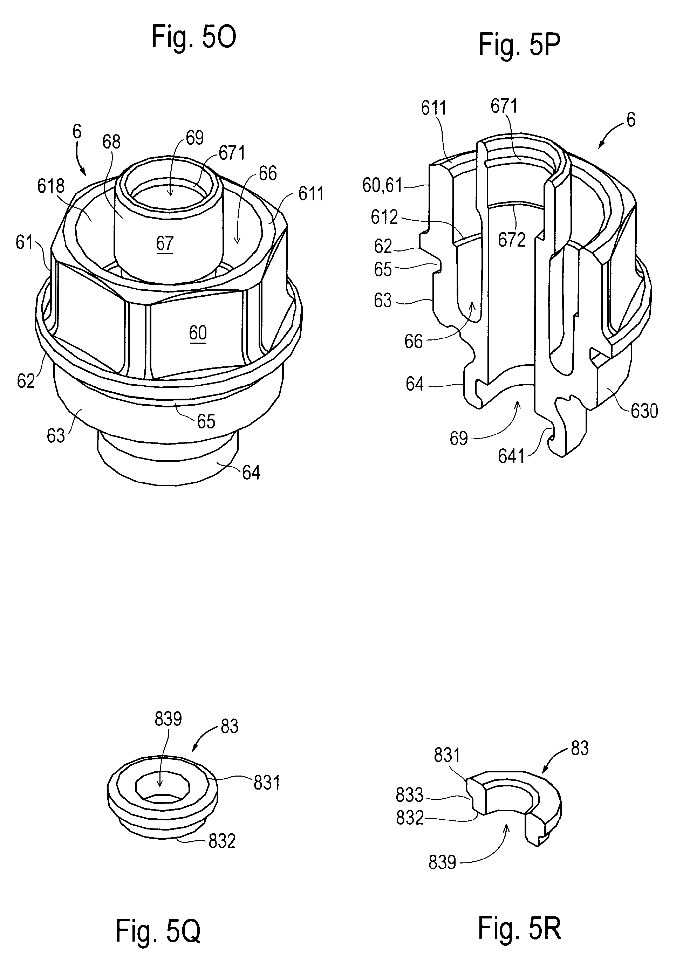

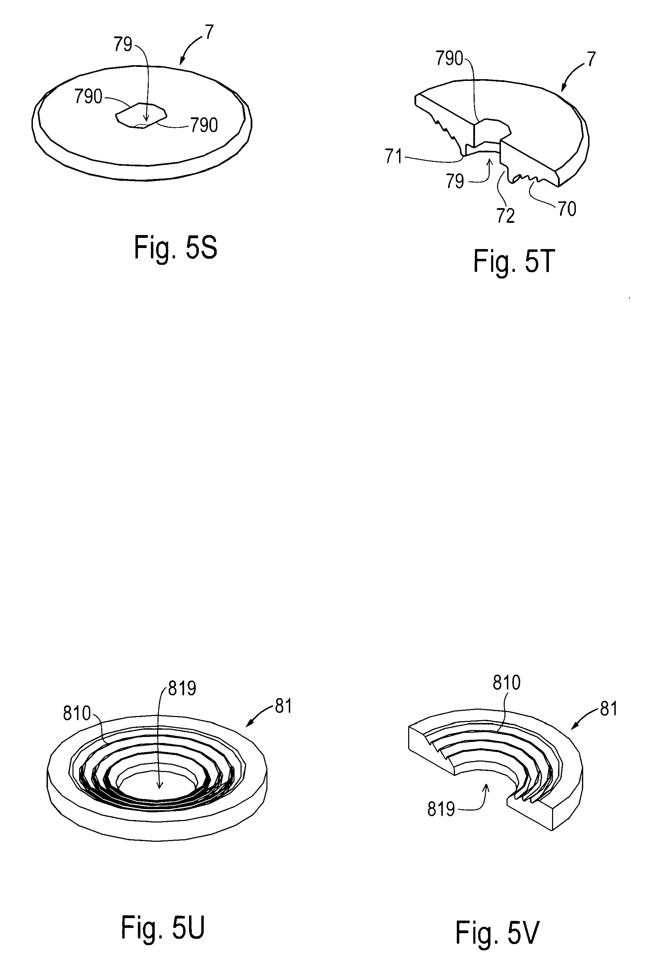

Der Handgriff **1** setzt sich aus einem oberen ersten Griffteil **11** und einem zweiten unteren Griffteil **12** zusammen. Beide Griffteile **11,12** haben eine Innenprofilierung **110,120,** wobei die Innenprofilierung **110** des ersten Griffteils **11** mit der Aussenprofilierung **20** der Aussenhülse **2** drehfest in Eingriff steht und die Innenprofilierung **120** am zweiten Griffteil **12** dazu dient, damit sich der zweite Griffteil **12** über die Aussenprofilierung **20** bis auf das Niveau der Radialnut **23** an der Aussenhülse **2** schieben lässt (s. Figuren 5C bis 5H). Die Deckfläche **22** der Aussenhülse **2** ist als Vertiefung **221** für eine Einlage **222** ausgebildet, die das in der Leitung geführte Medium kennzeichnet ― z.B. Heiss- oder Kaltwasser. Zwischen beiden Griffteilen **11,12** ist nahe zu den Innenprofilierungen **110,120** ein zweiter Sicherungsring **99** eingefügt, der an seinem Aussenumfang einen Überhang **991** aufweist, welcher von den am ersten Griffteil **11,** unten an der Innenprofilierung **110** vorhandenen Rastnasen **111** unterfasst wird und somit die axiale Sicherung des Handgriffs **1** bewirkt.

Beim Nullhub **H**_{**0**} ragt der den Stössel **4** oben abschliessende obere Zapfen **43** durch ein zentrisches Durchgangsloch **21** in der Aussenhülse **2** und zeigt damit die Stellung "völlig offen" an. Vom oberen Zapfen **43** strukturiert sich der Stössel **4** weiter abwärts in einen zweiten Fortsatz **42,** einen ersten Fortsatz **41** und einen Mittelabschnitt **40,** an deren Übergänge jeweils Absätze liegen. Auf dem zweiten Fortsatz **42** fixiert eine zweite Mutter **92** eine darunter liegende fünfte Scheibe **97,** die auf dem Absatz zum ersten Fortsatz **41** aufsitzt. Eine vierte Scheibe **96** sitzt auf der ersten Schulter **44** auf, die im Übergang vom ersten Fortsatz **41** zum Mittelabschnitt **40** liegt. Zwischen den beiden Scheiben **96,97** ist der Kragen **32** der Innenhülse **3** fixiert, wobei das Durchgangsloch **31** im Kragen **32** vom ersten Fortsatz **41** des Stössels **4** durchragt wird. Abwärts an den Mittelabschnitt **40** anschliessend, besitzt der Stössel **4** ein Zwischensegment **47** mit einer Abflachung **470** und endet mit dem unteren Zapfen **49,** der das Aussengewinde **490** zum Aufschrauben der ersten Mutter **91** aufweist. Oberhalb der ersten Mutter **91** liegt eine erste Scheibe **93,** die den Ventilteller **7** hält. Zwischen dem Ventilteller **7** und der ersten Scheibe **93** befindet sich die erste Dichtung **81,** welche die Absperrung des Ventils bewirkt. Am Übergang vom unteren Zapfen **49** zum Zwischensegment **47** umgibt den Stössel **4** eine zweite Dichtung **82,** die in einer Erweiterung **72** des Ventiltellers **7** eingelagert ist und von der ersten Scheibe **93** gehalten wird.

Die Aussenhülse **2** besitzt eine Innenprofilierung **27,** die sich intern von der Unterkante des Bundes **26** über den Schaft **24** bis auf das Niveau zur Radialnut **23** erstreckt. In die Innenprofilierung **27** greift eine Aussenprofilierung **30** ein, welche äusserlich am Schaft **34** der Innenhülse **3** vorhanden ist und sich darauf von deren Unterkante bis in die Nähe des Kragens **32** erstreckt. Die Profilierungen **27,30** bestehen aus zwischen leistenförmigen Erhöhungen liegenden Nuten, die jeweils axial verlaufen.

Das Kopfstück **6** setzt sich zunächst aus einem unteren Stutzen **64** und einem sich daran nach oben anschliessenden Innenstutzen **67** zusammen, welche von einem Axialdurchgang **69** zur Aufnahme des Mittelabschnitts **40** des Stössels **4** durchzogen sind. Vom Übergang zwischen dem unteren Stutzen **64** und dem Innenstutzen **67** zweigt ein Zwischenstutzen **63** ab, an den sich zuerst ein Flansch **62** und dann nach oben ein oberer Stutzen **61** anschliesst, wobei der Innenstutzen **67** und die Stutzen **63,61** mit dem Flansch **62** zwischen sich einen ring- und sackförmigen Freiraum **66** einschliessen. Der Innenstutzen **67** weist am oberen Abschnitt ein Aussengewinde **68** auf, das mit einem Innengewinde **38** der Innenhülse **3** in Eingriff steht. Im oberen Bereich des Innenstutzens **67** ist ein Dichtungspaket angebracht, das die Hauptdichtung **89** darstellt und sich von unten nach oben aus folgenden Elementen zusammensetzt: eine fünfte Dichtung **85,** eine zweite Scheibe **94,** eine sechste Dichtung **86,** eine dritte Scheibe **95,** wobei ein erster Sicherungsring **98** zur Fixierung des Dichtungspakets dient. Die fünfte Dichtung **85** als erstes Element der Hauptdichtung **89** ist im Innenabstand **a** positioniert. Der Innenabstand **a** ergibt sich als Versatz vom unteren Ende des Kopfstücks **6** bzw. der dritten Dichtung **83** ― jedenfalls bis zu der Position, in der das Strömungsmedium oberhalb des Ventiltellers **7** am Stössel **4** anstehen kann ― in das Innere des Oberteils bis an die fünfte Dichtung **85** heran.

Der obere Stutzen **61** ist an der Innenseite mit einem Innengewinde **618** versehen, das abwärts bis zu einer auf dem Niveau des Flanschs **62** liegenden Ringschulter **612** verläuft, auf welcher der Bund **26** der Aussenhülse **2** aufsteht. In Schliessrichtung des Ventils fährt die Innenhülse **3** in den Freiraum **66** ein. An der Aussenseite weist der obere Stutzen **61** eine Aussenprofilierung **60,** vorzugsweise in Gestalt eines Mehrkants zum Ansetzen eines Schraubenschlüssels, auf. Unterhalb des Flanschs **62** befindet sich eine Radialnut **65,** in die eine vierte Dichtung **84,** vorzugsweise ein O-Ring, eingelegt ist. Unterhalb der Radialnut **65** ist ein über den Zwischenstutzen **63** verlaufendes Aussengewinde **630** vorhanden. Der untere Stutzen **64** hat eine innere Radialnut **641** zur Aufnahme einer dritten Dichtung **83,** wobei die Radialnut **641** nach unten austritt und nach oben von hinterschnittener Kontur ist. In der Ventilstellung "völlig offen" beim Nullhub **H**_{**0**} drückt die Oberseite des Ventiltellers **7** gegen die Unterseite der dritten Dichtung **83** und bewirkt damit ein intensiveres Einpressen der dritten Dichtung **83** in die innere Radialnut **641,** mit dem Ergebnis verstärkter Abdichtung. Zugleich ist damit sichergestellt, dass kein Totraum in diesem Bereich verbleibt.

Der Gewindering **5** dient der Fixierung der Aussenhülse **2** im Kopfstück **6.** Hierzu besitzt der Gewindering **5** im oberen Bereich eine Aussenprofilierung **50 ―** z.B. eine Verzahnung zum Ansetzen eines Ratschenschlüssels ―, einen unterhalb der Aussenprofilierung **50** nach aussen auskragenden Flansch **52** und ein unter dem Flansch **52** vorhandenes Aussengewinde **58.** Im fixierten Zustand umfasst der Gewindering **5** den unteren Bereich des Schafts **24,** der Flansch **52** sitzt auf der zuoberst liegenden Schulter am oberen Stutzen **61,** das Aussengewinde **58** steht mit dem Innengewinde **618** in Eingriff und die Unterkante des Gewinderings **5** drückt auf die Schulter **25** der Aussenhülse **2.** Damit ist die mit ihrem Bund **26** auf der Ringschulter **612** des Kopfstücks **6** aufstehende Aussenhülse **2** positioniert. Alternativ kann das Kopfstück **6** fester oder separater Bestandteil des Ventilkörpers sein.

### Figur 2

In dieser Figur ist das zuvor dargestellte und beschriebene Oberteil in die Stellung "teilweise offen" mit dem Teilhub **H**_{**1**} ausgefahren. Der Bewegungsablauf des Oberteils gestaltet sich wie folgt. Mit dem Rechtsdrehen am Handgriff **1** wird die Aussenhülse **2** ebenfalls in Rechtsdrehung versetzt, welche ihrerseits die Innenhülse **3** mitdreht. Mit zunehmender Drehung der Innenhülse **3** schraubt sich deren Innengewinde **38** immer weiter auf das Aussengewinde **68** des Innenstutzens **67** auf und hierbei schiebt sich die Innenhülse **3** abwärts tiefer mit dem Schaft **34** in den Freiraum **66** hinein. Beim Abwärtsfahren der Innenhülse **3** gleitet deren am Schaft **34** vorhandene Aussenprofilierung **30** in der Innenprofilierung **27** des Schafts **24** der sich drehenden, aber nicht axial verschiebenden Aussenhülse **2.** Zugleich schleppt der den ersten Fortsatz **41** des Stössels **4** umgreifende Kragen **32** der Innenhülse **3** den gesamten Stössel **4** mit abwärts, so dass der untere Bereich des Mittelabschnitts **40** des Stössels **4** sukzessive aus dem unteren Stutzen **64** des Kopfstücks **6** herausfährt. Im Ergebnis bewegen sich der Ventilteller **7** und die von diesem getragene erste Dichtung **81** in Richtung Ventilsitz und verengen schrittweise die Durchlassöffnung im Ventil. Beim Teilhub **H**_{**1**} bewegt sich nur ein Anteil des Mittelabschnitts **40** des Stössels **4** unten aus der dritten Dichtung **83** heraus, der erheblich kleiner als der Innenabstand **a** ist. Die vom Strömungsmedium auf der Oberfläche des Stössels **4** verursachte Aufrauhung gelangt beim Zurückfahren in den Nullhub **H**_{**0**} keinesfalls an die fünfte Dichtung **85** als erstes Element der Hauptdichtung **89.**

Bei der Stellung "teilweise offen" mit dem Teilhub **H**_{**1**} ausgefahren, entfernt sich der obere Zapfen **43** des Stössels **4** aus dem Durchgangsloch **21** der Aussenhülse **2.** Damit wird angezeigt, dass sich das Oberteil nicht mehr in der Stellung "völlig offen" befindet.

### Figuren 3A bis 4

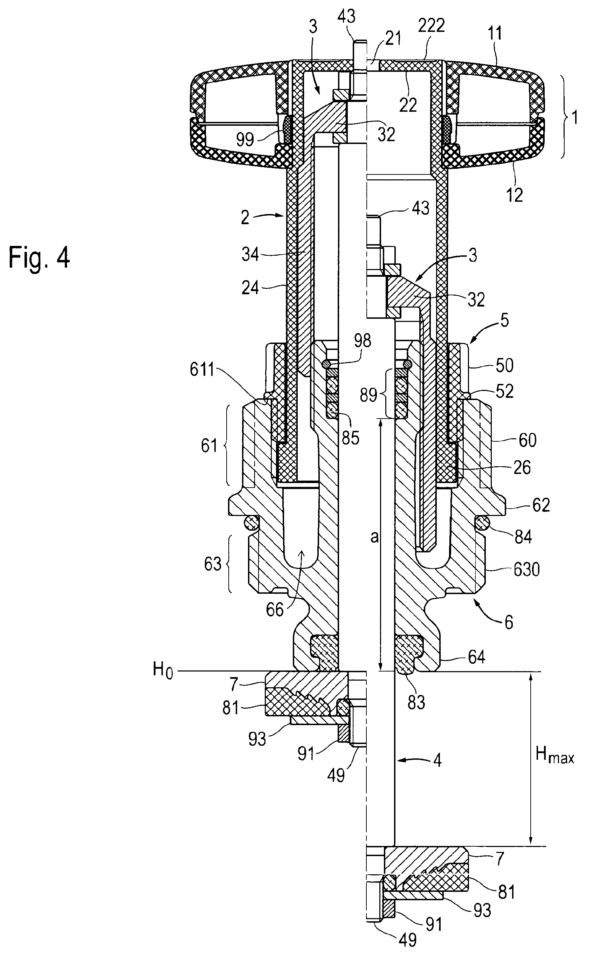

Jetzt ist das Oberteil in die Stellung "völlig geschlossen" mit dem Maximalhub **H**_{**max**} ausgefahren, wobei Figur 4 beide Endstellungen **H**_{**0**} sowie **H**_{**max**} im Vergleich zeigt. Mit weiterem Rechtsdrehen am Handgriff **1** über den Teilhub H₁ hinaus, werden auch die Aussen- und Innenhülse **2,3** wieder in Drehrichtung mitgenommen, das Innengewinde **38** weiter auf das Aussengewinde **68** geschraubt und somit der Schaft **34** der Innenhülse **3** noch tiefer in den Freiraum **66** hinein bewegt. Von der abwärts fahrenden Innenhülse **3** gleitet die Aussenprofilierung **30** in der Innenprofilierung **27** der axial feststehenden Aussenhülse **2.** Von der sich abwärts bewegenden Innenhülse **3** wird der Stössel **4** mitgenommen, so dass der untere Bereich des Mittelabschnitts **40** des Stössels **4** maximal aus dem unteren Stutzen **64** des Kopfstücks **6** herausfährt. Die vom Ventilteller **7** getragene erste Dichtung **81** ist bis auf den Ventilsitz gefahren und versperrt die Durchlassöffnung im Ventil gänzlich. Bei der Stellung "völlig geschlossen" mit dem Maximalhub **H**_{**max**} hat sich der obere Zapfen **43** des Stössels **4** am weitesten aus dem Durchgangsloch **21** der Aussenhülse **2** entfernt. Damit wird angezeigt, dass sich das Oberteil nicht in der Stellung "völlig offen" befindet.

Zur Schonung der sich aus der Paketanordnung 85,86;94,95 ergebenden Hauptdichtung **89** ist die beim Maximalhub **H**_{**max**} ausfahrende Länge des Mittelabschnitts **40** des Stössels **4** kleiner bemessen als der Innenabstand **a.** Damit wird vermieden, dass dem Strömungsmedium ausgesetzte, dadurch korrodierte und durch Ablagerungen aufgerauhte Oberfläche des Mittelabschnitts **40** des Stössels **4** beim Zurückfahren des Oberteils in den Nullhub **H**_{**0**} die Hauptdichtung **89** beschädigt.

### Figuren 5A und 5B

Das Oberteil ist in zwei verschiedenen Explosivdarstellungen gezeigt und soll eine Gesamtübersicht aller zugehörigen Bauteile vermitteln. In der Abfolge von oben nach unten setzt sich das Oberteil aus folgenden Bauteilen zusammen: dem Handgriff **1,** bestehend aus erstem und zweitem Griffteil **11,12,** dem Sicherungsring **99,** der Aussenhülse **2,** der zweiten Mutter **92,** der fünften Scheibe **97,** der Innenhülse **3,** der vierten Scheibe **96,** dem ersten Sicherungsring **98,** der Hauptdichtung **89 ―** bestehend aus der dritten Scheibe **95,** der sechsten Dichtung **86,** der zweiten Scheibe **94** und der fünften Dichtung **85 ―**, dem Stössel **4,** des Gewinderings **5,** dem Basisteil **6,** der vierten Dichtung **84,** der dritten Dichtung **83,** dem Ventilteller **7,** der zweiten Dichtung **82,** der ersten Dichtung **81,** der ersten Scheibe **93** und der ersten Mutter **91.**

### Figuren 5C bis 5F

Das erste halbschalenförmige Griffteil **11** mit seiner sternartigen Geometrie besitzt einen mittigen Axialdurchgang **119,** der von einer Innenprofilierung **110** umrandet ist. Alternierend endet jeder zweite Profilsteg mit einer tiefer abwärts liegenden, in den Axialdurchgang **119** hineinragenden Rastnase **111.** Die Rastnasen **111** befinden sich unterhalb der Innprofilierung **110** und setzen sich über den unteren Rand eines Innenstegs **112** nach unten fort. Anstelle einzelner Rastnasen **111** kann auch ein radial umlaufendes Rastorgan als Ringwulst vorhanden sein. Ein äusserer Randsteg **113** weist eine auslaufend genutete Unterkante **114** auf, die komplementär zur Oberkante des zweiten Griffteils **12** ausgebildet, mit diesem formschlüssig zusammengefügt ist. Das zweite Griffteil **12** besitzt ebenso mittig einen Axialdurchgang **129,** der von einer Innenprofilierung **120** mit Profilstegen umrandet ist, die ein Innensteg **122** umgibt.

### Figuren 5G und 5H

Die Aussenhülse **2** weist auf der Oberseite einen erhöhten, aussen umlaufenden Rand auf, so dass eine scheibenförmige Vertiefung **221** entsteht, die gleichzeitig die Deckfläche **22** bildet. In der Deckfläche **22** ist ein zentrisch positioniertes, axiales Durchgangsloch **21** vorhanden, das von einem erhabenen ringförmigen Bereich umrandet wird. An der Aussenseite ist am oberen Ende eine Aussenprofilierung **20** vorgesehen, die sich bis zur Radialnut **23** erstreckt und zum formschlüssigen Eingriff mit der Innenprofilierung **110** des ersten Griffteils **11** bestimmt ist. Die Innenprofilierung **120** am zweiten Griffteil **12** erlaubt, dass sich dieses Griffteil **12** über die Aussenprofilierung **20** der Aussenhülse **2** bis in die Radialnut **23** schieben lässt. Aussenprofilierung **20** und Radialnut **23** weisen in etwa die gleiche Höhe auf Im montierten Zustand liegt das zweite Griffteil **12** an der Unterkante der Radialnut **23** an, auf dem Innensteg **122** des zweiten Griffteils **12** ist ein zweiter Sicherungsring **99** positioniert, dessen Überhang **991** von den Rastnasen **111** des ersten Griffteils **11** unterfasst wird. Unten endet die Aussenhülse **2** nach einem zylindrischen Schaft **24** mit einem im Aussendurchmesser verdickten Bund **26,** wobei im Übergang zwischen Schaft **24** und Bund **26** eine Schulter **25** entsteht. Innerlich besitzt die Aussenhülse **2** eine Innenprofilierung **27,** welche vom unteren Ende bis etwa an die Radialnut **23** heran verläuft und von axial erstreckten, erhabenen Stegen sowie dazu alternierenden Nuten gebildet wird.

### Figuren 5J und 5K

Die Innenhülse **3** weist einen kegelförmig zulaufenden Kragen **32** auf, der oben mit einer Planfläche endet, welche ein axiales Durchgangsloch **31** umrandet. An der Aussenfläche des Schafts **34** der Innenhülse **3** verläuft vom unteren Rand bis nahe an den Kragen **32** eine aus erhabenen Stegen und sich dazwischen ergebenden Nuten bestehende Aussenprofilierung **30,** die zum komplementären Eingriff mit der Innenprofilierung **27** der Aussenhülse **2** bestimmt ist. Innerlich besitzt der Schaft **34** der Innenhülse **3** ein Innengewinde **38,** welches mit dem Aussengewinde **68** des Kopfstücks **6** in Eingriff steht.

### Figur 5L

Der langgestreckte Stössel **4** besteht aus einem Mittelabschnitt **40,** der oben an einer ersten Schulter **44** endet, von der sich ein im Durchmesser verkleinerter erster Fortsatz **41** bis zu einer zweiten Schulter **45** erstreckt. Hier schliesst sich ein zweiter, im Durchmesser kleiner Fortsatz **42** mit einem Aussengewinde **420** an, die an einer dritten Schulter **46** enden, von der sich ein erneut im Durchmesser verkleinerter oberer Zapfen **43** erstreckt. Das untere Ende des Mittelabschnitts **40** besitzt einen Hinterschnitt **48,** der ein Zwischensegment **47** separiert, das mit einer einseitigen Abflachung **470** versehen ist und die gleiche Form, wie der Axialdurchgang **79** des Ventiltellers **7** besitzt. An das Zwischensegment **47** schliesst sich ein unterer Zapfen **49** mit Aussengewinde **490** zur Befestigung der ersten Mutter **91** an. Der untere Zapfen **49** bildet das untere Ende des Stössels **4.**

### Figuren 5M und 5N

Der Gewindering **5** weist einen im Prinzip zylindrischen Querschnitt auf und wird äusserlich durch einen auskragenden Flansch **52** in einen oberen Bereich mit einer Aussenprofilierung **50** und einen unteren Bereich mit einem Aussengewinde **58** geteilt.

### Figuren 5O und 5P

Das Kopfstück **6** besteht aus einem Innenstutzen **67** mit einem Axialdurchgang **69,** einem oberen Stutzen **61,** einem Zwischenstutzen **63** und einem unteren Stutzen **64,** wobei der Innenstutzen **67** den oberen Stutzen **61** überragt und oberer Stutzen **61** mit Flansch **62** und Zwischenstutzen **63** den Innenstutzen **67** mit Abstand umfassen. Der Abstand ergibt einen ring- und sackförmigen Freiraum **66.** Der Innenstutzen **67** weist am oberen Abschnitt ein Aussengewinde **68** auf. Im zur Führung des Stössels **4** bestimmten Axialdurchgang **69** ist nahe der oberen Mündung eine innere Radialnut **671** ausgebildet, in der der erste Sicherungsring **98** zur Fixierung der Hauptdichtung **89** aufgenommen wird. Unterhalb der Radialnut **671** ist eine Ringschulter **672** ausgebildet, auf der die fünfte Dichtung **85** als unterstes Element der Hauptdichtung **89** aufliegt. Zur Aufnahme des Gewinderings **5** hat der obere Stutzen **61** an seiner Innenseite das Innengewinde **618** und darunter zum Aufsetzen des Bundes **26** der Aussenhülse **2** eine Ringschulter **612.** Der Freiraum **66** erstreckt sich weiter unterhalb der Ringschulter **612** bis zur Abzweigung des Zwischenstutzens **63** vom Übergang zwischen dem unteren Stutzen **64** und dem Innenstutzen **67.** Der obere Stutzen **61** ist äusserlich mit einer Aussenprofilierung **60,** hier ein Sechskant versehen. Der Zwischenstutzen **63** besitzt am Übergang zum oberen Stutzen **61** einen Flansch **62** sowie eine darunter liegende Radialnut **65** zur Aufnahme der vierten Dichtung **84.** Im Anschluss an die Radialnut **65** erstreckt sich ein Aussengewinde **630.** Der untere Stutzen **64** hat im Bereich des Axialdurchgangs **69** eine innere Radialnut **641** zur Einbettung der dritten Dichtung **83.**

### Figuren 5Q und 5R

Die dritte Dichtung **83** besitzt einen Axialdurchaana **839** zum gleitenden Durchlass des Mittelabschnitts **40** des Stössels **4** sowie eine obere Partie **831** und eine im Aussendurchmesser kleinere untere Partie **832,** so dass sich an der unteren Partie **832** ein Freischnitt **833** ergibt.

### Figuren 5S bis 5V

Der Ventilteller **7** hat einen zentrischen Axialdurchgang **79** mit Abflachungen **790** zur oberseitigen Mündung hin und eine Profilierung **70** auf der Unterseite. An der unteren Mündung besitzt der Axialdurchgang **79** eine Erweiterung **72,** um darin die zweite Dichtung **82** einzulagern. Die Erweiterung **72** wird von einem nach unten erhabenen Rand **71** begrenzt. An den Abflachungen **790** kommen die Abflachungen **470** des Zwischensegments **47** des Stössels **4** zu liegen.

Die erste Dichtung **81,** welche zur Absperrung im Ventil bestimmt ist, besitzt einen Axialdurchgang **819** und eine oberseitige Profilierung **810,** die komplementär zur Profilierung **70** am Ventilteller **7** beschaffen ist. Der Axialdurchgang **819** in der ersten Dichtung **81,** dient zur Aufnahme des erhabenen Randes **71** des Ventiltellers **7.**

### Figuren 6A bis 6E

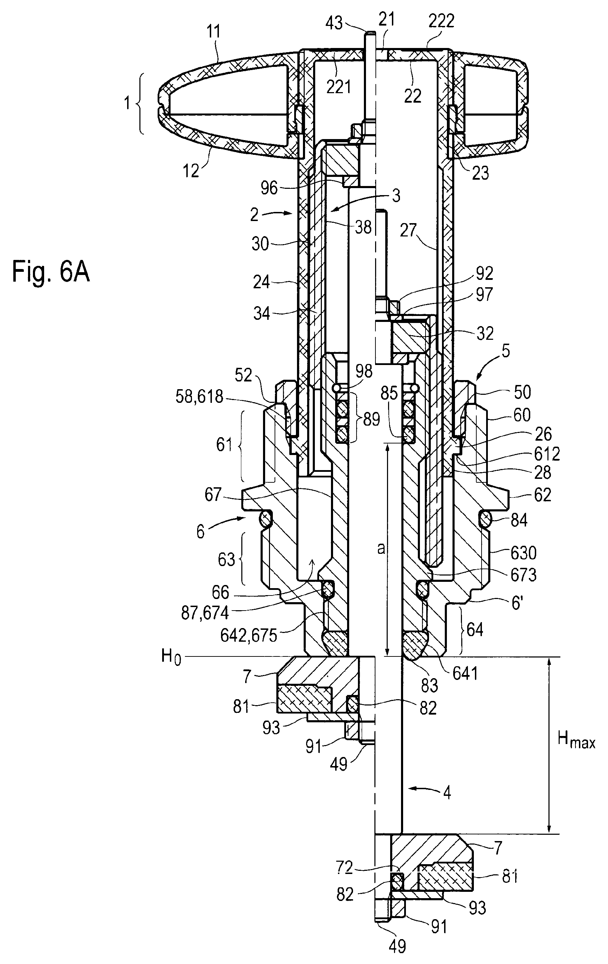

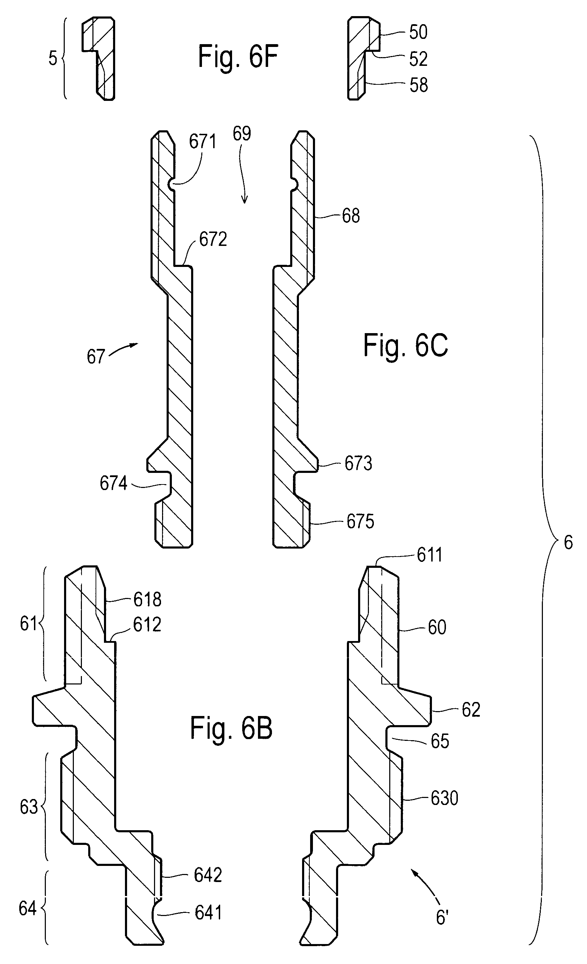

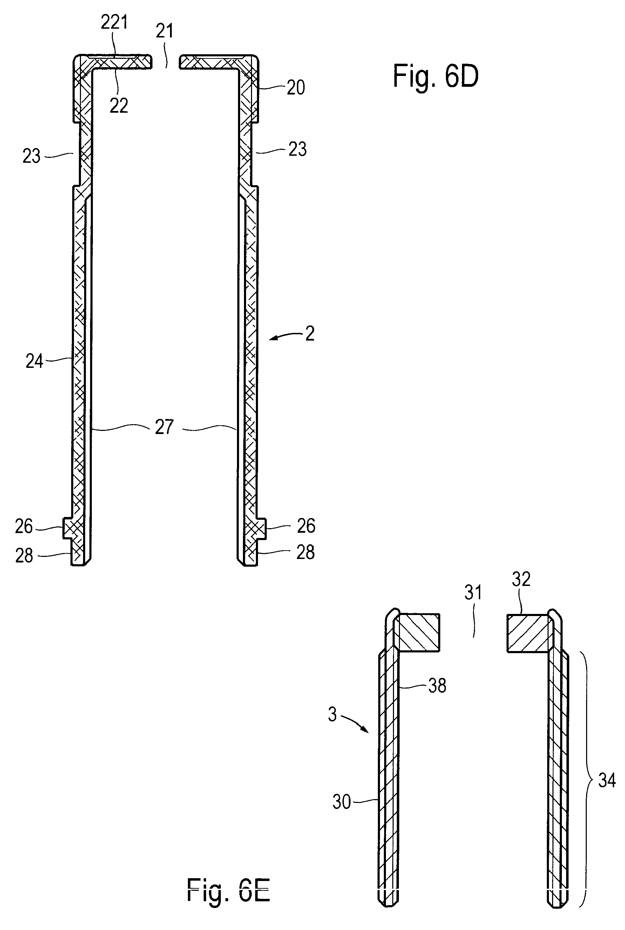

In dieser Figurenfolge ist ein Oberteil *zweiter Variante* mit geändertem Kopfstück **6,** aber geringen konstruktiven Modifikationen an der Aussen- und Innenhülse **2,3** dargestellt, wobei die übrigen Bauteile und die Funktionsweise unverändert sind. Die Figur 6A zeigt das Oberteil in beiden Endstellungen **H**_{**0**} sowie **H**ₘₐₓ im Vergleich. Anstelle des zuvor einteiligen Kopfstücks **6** setzt sich dieses nun aus einem Aussenstück **6'** und einem separaten Innenstutzen **67** zusammen, der in das Aussenstück **6'** mittels des Aussengewindes **675** und des im Aussenstück **6'** vorhandenen Innengewindes **642** eingeschraubt ist. Durch den Innenstutzen **67** verläuft der Axialdurchgang **69.** Das Innengewinde **642** liegt im unteren Stutzen **64** oberhalb der inneren Radialnut **641.** Über dem unteren Stutzen **64** schliesst sich wiederum der Zwischenstutzen **63** mit dem Aussengewinde **630** an, dem die Radialnut **65** und dann der Flansch **62** folgt. Das Aussenstück **6'** endet oben mit dem oberen Stutzen **61,** der die Aussenprofilierung **60,** z.B. ein Sechskant, aufweist und innen mit dem Innengewinde **618** versehen ist, das an einer Ringschulter **612** ausläuft.

Der Innenstutzen **67** besitzt oberhalb des Aussengewindes **675** eine Radialnut **674** zur Aufnahme einer siebenten Dichtung **87,** die im montierten Zustand zwischen dem Aussenstück **6'** und dem eingeschraubten Innenstutzen **67** liegt. Nach oben wird die Radialnut **674** von einem Flansch **673** begrenzt, über dem der Innenstutzen **67** zunächst im Aussendurchmesser verkleinert ist und sich dann wieder erweitert. Der erweiterte Bereich hat ein Aussengewinde **68,** mit dem das Innengewinde **38** am Schaft **34** der Innenhülse **3** in Eingriff steht. Innerlich des erweiterten Bereichs ist eine innere Radialnut **671** zur Aufnahme des ersten Sicherungsrings **98** vorhanden, unterhalb der im Abstand die Ringschulter **672** liegt. Zwischen Sicherungsring **98** und Ringschulter **672** ist die Hauptdichtung **89,** bestehend aus dem Dichtungspaket **85**,**86**;**94**,**95**, gelagert.

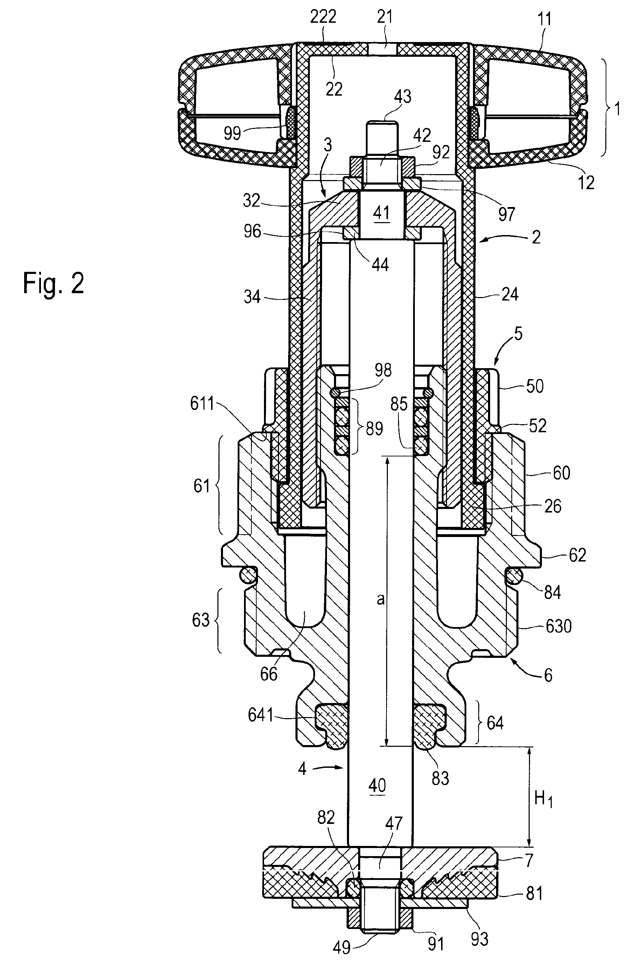

Nahe dem unteren Abschluss **28** der Aussenhülse **2** ist anstelle des zuvor direkt das Ende bildenden Bundes **26** (s. Figur 2), der Bund **26** nun vom unteren Abschluss **28** versetzt positioniert und setzt wiederum auf der Ringschulter **612** des jetzt zweiteiligen Kopfstücks **6,** nämlich im Aussenstück **6'** auf. Die Aussenhülse **2** besitzt unverändert oben an ihrem Schaft **24** die Aussenprofilierung **20,** das Durchgangsloch **21** in der Deckfläche **22** mit der oberseitigen Vertiefung **221,** die Radialnut **23** und die Innenprofilierung **27.** Zur Fixierung der im Aussenstück **6'** stehenden Aussenhülse **2** dient der Gewindering **5,** dessen in der unteren Partie vorhandenes Aussengewinde **58** mit dem Innengewinde **618** am Aussenstück **6'** verschraubt ist, wobei der Flansch **52** auf der Oberkante des Aussenstücks **6'** aufsitzt. Unverändert ist auch an der oberen Partie des Gewinderings 5 die Aussenprofilierung **50.**

### Figur 7

Dieses Oberteil *dritter Variante* weist geringe konstruktive Modifikationen an der Aussen- und Innenhülse **2,3,** am Kopfstück **6** sowie am Ventilteller **7** auf, wobei die Funktionsweise und die übrigen Bauteile unverändert bleiben. Momentan befindet sich das Oberteil in der Endstellung **H**_{**0**}**.** Das Kopfstück **6** hat einen schräg verlaufenden Abschnitt, der sich vom unteren Stutzen **64** bis zum Zwischenstutzen **63** mit dem Aussengewinde **630** erstreckt, dem die Radialnut **65** und dann der Flansch **62** folgen. Das Kopfstück **6** endet mit dem unveränderten oberen Stutzen **61,** der die Aussenprofilierung **60,** z.B. ein Sechskant, aufweist und mit dem Innengewinde **618** versehen ist. Durch den Innenstutzen **67** verläuft der Axialdurchgang **69** der den Mittelabschnitt **40** des Stössels **4** aufnimmt. Der Innenstutzen **67** hat am oberen Ende eine sich nach aussen erstreckende Erweiterung, die das Aussengewinde **68** aufweist, mit dem das Innengewinde **38** am Schaft **34** der Innenhülse 3 in Eingriff steht. Innerhalb des erweiterten Bereichs ist eine innere Radialnut **671** zur Aufnahme des ersten Sicherungsrings **98** vorhanden, darunter liegt im Abstand zur Hauptdichtung **89** die Ringschulter **672.** Zwischen erstem Sicherungsring **98** und Ringschulter **672** ist die Hauptdichtung **89,** bestehend aus dem Dichtungspaket **85**,**86**;**94**,**95**, gelagert.

An der Aussenhülse **2** hat der Bund **26** nun eine äussere Radialnut **262,** in der die achte Dichtung **88** eingelegt ist. Das untere Ende des Bundes **26** sitzt auf der Ringschulter **612** des Kopfstücks **6** auf. Die Aussenhülse **2** besitzt unverändert oben an ihrem Schaft **24** die Aussenprofilierung **20.** Das Durchgangsloch **116** und die oberseitige Einlage **117** sind jetzt in der Deckfläche **115** des ersten Griffteils **11** vorgesehen. Die Radialnut **23** und die Innenprofilierung **27** befinden sich weiterhin an der Aussenhülse **2.** Zur Fixierung der im Kopfstück **6** stehenden Aussenhülse **2** dient der Gewindering **5,** deren in der unteren Partie vorhandenes Aussengewinde **58** mit dem Innengewinde **618** am Kopfstück **6** verschraubt ist. Dabei sitzt der Flansch **52** des Gewinderings **5** auf der Oberkante des Kopfstücks **6** auf. Die Aussenprofilierung **50** an der oberen Partie des Gewinderings **5** bleibt dabei unverändert. An der Innenhülse **3** ist der Kragen **32** abgewandelt ― jetzt eben ― hat aber gleichfalls am Schaft **34** die Aussenprofilierung **30** und das Innengewinde **38** sowie das Durchgangsloch **31** am Kragen **32.** In der hiesigen Ausführung erstreckt sich die Aussenprofilierung **30** nur über einen mittleren Bereich des Schafts **34.** Zwischen dem Ventilteller **7** und der vorgesetzten ersten Scheibe **93** ist die erste Dichtung **81** vorgesehen, welche die Absperrung des Ventils bewirkt und bis an den unteren Zapfen **49** heranreicht, so dass hier die zweite Dichtung **82** aus Figur 2 entfällt. Erneut ist auf das Aussengewinde **490** am unteren Zapfen **49** eine erste Mutter **91** gegen die erste Scheibe **93** aufgeschraubt.

### Figuren 8A und 8B

Dieses Figurenpaar zeigt ein Oberteil *vierter Variante* in der Endstellung **H**_{**0**} mit konstruktiven Unterschieden an der Aussen- und Innenhülse **2,3,** am Kopfstück **6,** sowie einer geringfügigen Änderung am Ventilteller **7.** Durch die Aufnahme einer Zwischenhülse **5'** als weiteres Bauteil modifiziert sich die Funktion und eine kleinere Dimension des Ventil-Oberteils lässt sich bei verlängerter Bauweise für spezielle Anwendungen realisieren. Das Kopfstück **6** setzt sich zunächst aus dem unteren Stutzen **64** und einem sich daran nach oben anschliessenden Innenstutzen **67** zusammen, welche von einem Axialdurchgang **69** zur Aufnahme des Mittelabschnitts **40** des Stössels **4** durchzogen sind. Über dem unteren Stutzen **64** schliesst sich der Zwischenstutzen **63** mit dem Aussengewinde **630** an, dem die Radialnut **65** und dann der Flansch **62** folgen. Mit dem oberen Stutzen **61,** der die Aussenprofilierung **60 ―** hier z.B. ein Sechskantprofil ― aufweist, endet das Kopfstück **6,** wobei die gegenüberliegende Innenseite mit einem Innengewinde **618** versehen ist. Das Innengewinde **618** verläuft abwärts bis oberhalb einer auf dem Niveau des Flansches **62** liegenden Ringschulter **612** und steht mit dem Aussengewinde **58'** der Zwischenhülse **5'** in Eingriff. Die Zwischenhülse **5'** besitzt im Anschluss an das Aussengewinde **58'** eine Radialnut **51',** in der eine achte Dichtung **88** eingelegt ist. Oberhalb davon ist eine Radialnut **57'** vorhanden, welche das bei Drehung des Handgriffs **1** vordere Stiftende des mitdrehenden Arretierelements **29** aufnimmt, das die Zwischenhülse **5'** zusätzlich gegen Axialverschiebung sichert.

Im oberen Bereich des Innenstutzens **67** ist die Hauptdichtung **89** zwischen der ersten Ringschulter **672** und dem ersten Sicherungsring 98', auf dem die Zwischenhülse **5'** aufsteht und der auf der Ringschulter **612** aufliegt, angeordnet. Die Hauptdichtung **89** setzt sich aus dem Dichtungspaket mit den Einzelkomponenten **85,86;94,95** zusammen. Das erste Element der Hauptdichtung **89** ist die fünfte Dichtung 85, die mit dem Innenabstand **a** positioniert ist. Der Innenabstand a ergibt sich als Versatz vom unteren Ende des Kopfstücks **6** bzw. der dritten Dichtung **83 -** jedenfalls bis zu der Position, in der das Strömungsmedium oberhalb des Ventiltellers **7** am Stössel **4** anstehen kann - in das Innere des Oberteils bis an die fünfte Dichtung **85** heran.

Die Aussenhülse **2** ist am Bund **26** mit vorzugsweise zwei sich 180° gegenüber liegenden Flachsenkungen **261** versehen, von der sich jeweils ein Durchgangsloch **260** in radialer Richtung erstreckt und als Radialnut **57'** in der Zwischenhülse **5'** fortsetzt. Die Aussenhülse **2** sitzt axial auf der Ringfläche **611** am oberen Stutzen **61** des Kopfstücks **6** auf und besitzt unverändert oben an ihrem Schaft **24** die Aussenprofilierung **20** und die Radialnut **23.** Das Durchgangsloch **21** sowie die oberseitige Einlage **222** befinden sich in der Deckfläche **115** des ersten Griffteils **11.** Die Innenprofilierung **27** erstreckt sich dabei oberhalb des Bundes **26,** vom oberen Ende der Zwischenhülse **5'** über den Schaft **24** bis zum gegenüberliegenden Ende. In die Innenprofilierung **27** der Aussenhülse 2 greift eine Aussenprofilierung **30** ein, welche äusserlich an einem nach aussen erweiterten Kragen **32** in Fortsetzung des Schafts **34** der Innenhülse **3** vorhanden ist und sich koaxial zum Aussengewinde **39** befindet, das mit dem Innengewinde **59'** der Zwischenhülse **5'** in Eingriff steht, wobei zwischen Aussenprofilierung **30** und Aussengewinde **39** ein an sich äusserlich glatter Abschnitt des Schafts **34** liegt. Die Profilierungen **27,30** bestehen aus zwischen leistenförmigen Erhöhungen liegenden Nuten, die jeweils axial verlaufen. Alternativ kann die Zwischenhülse **5'** einteilig mit dem Kopfstück **6** verbunden sein.

Der Kragen **32** an der Innenhülse **3** hat eine nach oben offene, erweitere Mündung **33,** die sich axial vom Durchgangsloch **31** fortsetzt. Auf dem zweiten Fortsatz **42** sind eine zweite Mutter **92** und eine fünfte Scheibe **97** innerhalb der Mündung **33** positioniert, welche die Innenhülse **3** in axialer Richtung fest, jedoch radial drehbar zwischen der ersten Schulter **44** und der zweiten Schulter **45** begrenzen.

Bei Drehen des Handgriffs **1** in Schliessrichtung des Oberteils wird die Aussenhülse **2** mitgenommen und gleitet dabei an der feststehenden Zwischenhülse **5'** sowie auf der zuoberst liegenden Ringfläche **611** des oberen Stutzens **61** des Kopfstücks **6.** Die vorderen Stiftenden der mitdrehenden Arretierelemente **29** gleiten in der Radialnut **57'** an der Zwischenhülse **5'.** Zugleich wird die Innenhülse **3** über den Eingriff zwischen den Konturen **27,30** in Rotation versetzt, dabei fährt die Innenhülse **3** mit ihrem Aussengewinde **39** in das Innengewinde **59'** der Zwischenhülse **5'** ein und treibt den Stössel **4** axial aus dem Kopfstück **6** aus. Beim Betätigen des Oberteils in Richtung Offenstellung wird der Stössel **4** durch die Axialverschiebung der Innenhülse **3** in das Oberteil hineingezogen.

## Patentansprüche

1. Ventil für Wasser mit einem in einen Ventilkörper einzusetzenden Oberteil, wobei der Ventilkörper oder das Oberteil ein Kopfstück (**6**) mit einem Axialdurchgang (**69**) hat und das Oberteil besitzt:
a) eine Aussenhülse (**2**), die am Kopfstück (**6**) drehbar gelagert und axial fixiert ist;
b) einen zwischen einem Nullhub (**H**_{**0**}) und einem Maximalhub (**H**_{**max**}) beweglichen Stössel (**4**), der:
ba) im Kopfstück (**6**) und der Aussenhülse (**2**) konzentrisch axial beweglich angeordnet ist und direkt im Axialdurchgang (**69**) des Kopfstücks (**6**) geführt ist;
bb) mit einer ersten Dichtung (**81**) versehen ist, welche am auf einen Ventilsitz im Ventilkörper gerichteten Ende (**47,49**) des Stössels (**4**) angeordnet ist und zur Absperrung des Ventils dient; und
bc) von einer Hauptdichtung (**89**) umgeben ist, welche im Kopfstück (**6**) sitzt; und
c) einen drehbaren Handgriff (**1**) zur Betätigung des Oberteils, wobei die Aussenhülse (**2**) einerseits direkt mit dem Handgriff (**1**) und andererseits direkt mit einem Mitnahmeelement (**3**) verbunden ist, und das Mitnahmeelement (**3**) äusserlich eine Aussenprofilierung (**30**) aufweist (**3**) und axial fest am Stössel (**4**) angeordnet ist; wobei
d) die Aussenhülse (**2**) einen in Richtung der ersten Dichtung (**81**) offenen Schaft (**24**) aufweist, der innerlich eine Innenprofilierung (**27**) hat;
e) die Innenprofilierung (**27**) der Aussenhülse (**2**) mit der Aussenprofilierung (**30**) des Mitnahmeelements (**3**) radialen Formschluss hat und das in der Aussenhülse (**2**) geführte Mitnahmeelement (**3**) axial verschiebbar ist;
f) ein feststehendes Vorschubgewinde (**68,59'**) vorhanden ist, das sich am Kopfstück (**6**) befindet, **dadurch gekennzeichnet, dass**
g) das Mitnahmeelement (**3**) ein Gewinde (**38,39**) hat;
h) das Gewinde (**38,39**) des Mitnahmeelements (**3**) und das Vorschubgewinde (**68,59'**) in Eingriff sind; und
i) bei Betätigung des Handgriffs (**1**) das Mitnahmeelement (**3**) am Stössel (**4**) zumindest soweit radial lose angeordnet ist, dass ab einem definierten Mindestreibwiderstand zwischen der ersten Dichtung (**81**) und dem Ventilsitz der Stössel (**4**) radial blockiert ist.

2. Ventil nach Anspruch 1, **dadurch gekennzeichnet, dass**
a) das Mitnahmeelement (**3**) von hülsenförmiger Gestalt mit einem in Richtung der ersten Dichtung (**81**) offenen Schaft (**34**) ist und andererseits Befestigungsmittel (**31,32**) zur Verbindung mit dem Stössel (**4**) besitzt; und
b) das Gewinde (**38**) am Mitnahmeelement (**3**) innerlich als Innengewinde (**38**) gestaltet ist und das feststehende Vorschubgewinde (**68**) sich direkt am Kopfstück (**6**) befindet; oder
c) das Gewinde (**39**) am Mitnahmeelement (**3**) äusserlich als Aussengewinde (**39**) gestaltet ist und das feststehende Vorschubgewinde (**59'**) als Innengewinde (**59'**) beschaffen ist, welches sich direkt am Kopfstück (**6**) oder an einer in das Kopfstück (**6**) eingesetzten Zwischenhülse (**5'**) befindet.

3. Ventil nach zumindest einem der Ansprüche 1 und 2, **dadurch gekennzeichnet, dass** die Hauptdichtung (**89**) mit einem Innenabstand (**a**) im Kopfstück (**6**) mindestens soweit rückversetzt angeordnet ist, dass bei keiner Stellung des Stössels **(4)** zwischen Null- und Maximalhub (**H**₀,**H**ₘₐₓ) dem Strömungsmedium ausgesetzte Oberfläche des Stössels (**4**) an die Hauptdichtung (89) gelangt.

4. Ventil nach zumindest einem der Ansprüche 1 bis 3, **dadurch gekennzeichnet, dass**
a) das Kopfstück (**6**) einen Innenstutzen (**67**) hat, der vom Axialdurchgang (**69**) durchzogen ist, als Vorschubgewinde (**68**) ein Aussengewinde (**68**) besitzt und von einem Aussenstutzen (**61,62,63**) mit einem dazwischen liegenden radialen, sacklochförmigen Freiraum (**66**) umfasst ist, der dem anteiligen Schaft (**34**) des Mitnahmeelements (**3**) Platz bietet; und
b) die Hauptdichtung (**89**) mit dem Innenabstand (**a**) im Innenstutzen (**67**) angeordnet ist.

5. Ventil nach zumindest einem der Ansprüche 1 bis 4, **dadurch gekennzeichnet, dass**
a) in der zur ersten Dichtung (**81**) gerichteten Mündung des Kopfstücks (**6**) eine dritte Dichtung (**83**) eingesetzt ist, die einen langgestreckten Mittelabschnitt (**40**) des herausragenden Stössels (**4**) umgibt und zwischen dem Kopfstück (**6**) und dem Stössel (**4**) eine radiale sowie axiale Abdichtung bewirkt; und
b) die dritte Dichtung (**83**) im unbelasteten Zustand eine über die das Kopfstück (**6**) abschliessende Ebene hervortretende Auswölbung besitzt, welche sich beim Nullhub (**H**_{**0**}) mit der weitestmöglich eingefahrenen Stellung des Stössels (**4**) durch die angepresste Rückseite eines die erste Dichtung (**81**) tragenden Ventiltellers (**7**) in die Ebene verformt, so dass zwischen der Rückseite des Ventiltellers (**7**) und der abschliessenden Ebene des Kopfstücks (**6**) umschlossener Totraum vermieden wird.

6. Ventil nach mindestens einem der Ansprüche 1 bis 5, **dadurch gekennzeichnet, dass**
a) das Befestigungsmittel (**31,32**) zur Verbindung des Mitnahmeelements (**3**) mit dem Stössel (**4**) ein sich an den Schaft (**34**) anschliessenden Kragen (**32**) mit einem darin zentrisch angeordneten Durchgangsloch (**31**) umfasst; und
b) im Durchgangsloch (**31**) ein vorzugsweise im Durchmesser verjüngter erster axialer Fortsatz (**41**) des Stössels (**4**) steckt, an den sich ein zweiter axialer Fortsatz (**42**) anschliesst, der axial auf dem Kragen (**32**) fixiert ist, z.B. mittels eines am zweiten Fortsatz (**42**) vorhandenen Aussengewindes (**420**) und einer darauf geschraubten zweiten Mutter (**92**).

7. Ventil nach mindestens einem der Ansprüche 1 bis 6, **dadurch gekennzeichnet, dass** das Befestigungsmittel (**31,32**) zur Verbindung des Mitnahmeelements (**3**) mit dem Stössel (**4**) eine Rutschkupplung umfasst, z.B. mittels einer Tellerfeder realisiert, welche bei Überschreiten eines definierten Reibwiderstands zwischen der ersten Dichtung (**81**) und dem Ventilsitz auskuppelt, so dass der Stössel (**4**) radial blockiert verharrt.

8. Ventil nach mindestens einem der Ansprüche 1 bis 7, **dadurch gekennzeichnet, dass** der Stössel (**4**) am zum Handgriff (**1**) weisenden Ende mit einem oberen Zapfen (**43**) abschliesst, der beim Nullhub (**H**_{**0**}) mit der weitestmöglich eingefahrenen Stellung des Stössels (**4**) in einem Durchgangsloch (**21,116**) in der Deckfläche (**22**) der Aussenhülse (**2**) oder einem ersten Griffteil (**11**) zu liegen kommt, vorzugsweise aus dem Durchgangsloch (**21**) hervorsteht, und somit ein eingestellter Nullhub (**H**_{**0**}) optisch und durch Abtasten wahrnehmbar ist.

9. Ventil nach mindestens einem der Ansprüche 1 bis 8, **dadurch gekennzeichnet, dass**
a) der Handgriff (**1**) mit der Aussenhülse (**2**) einstückig verbunden oder an der Aussenhülse (**2**) lösbar und drehfest angeordnet ist;
b) der Handgriff (**1**) sich aus einem ersten halbschalenartigen Griffteil (**11**) und einem zweiten halbschalenartigen Griffteil (**12**) zusammensetzt; und
c) zur Befestigung des zweiteiligen Handgriffs (**1**) an der Aussenhülse (**2**) vorgesehen sind:
ca) an der Aussenhülse (**2**) eine Aussenprofilierung (**20**), die sich am Ende des Schafts (24) befindet, welcher an die Deckfläche (**22**) angrenzt, sowie eine unterhalb der Aussenprofilierung (**20**) vorhandene Radialnut (**23**);
cb) am ersten und zweiten Griffteil (**11,12**) je ein zentrischer Axialdurchgang (**119,129**), der jeweils von einer Innenprofilierung (**110,120**) umrandet ist; wobei
cc) das erste Griffteil (**11**) unten an der Innenprofilierung (**110**) ein zirkuläres Rastorgan (**111**) in Gestalt einer Ringwulst oder einzelner Rastnasen hat;
cd) die Innenprofilierung (**110**) des ersten Griffteils (**11**) mit der Aussenprofilierung (**20**) an der Aussenhülse (**2**) in formschlüssigem Eingriff steht;
ce) die Innenprofilierung (**120**) des zweiten Griffteils (**12**) sich über die Aussenprofilierung (**20**) der Aussenhülse (**2**) schieben lässt, um das zweite Griffteil (**12**) auf das Niveau der Radialnut (**23**) zu bringen; und
cf) zwischen beiden Griffteilen (**11,12**) in die Radialnut (**23**) ein zweiter Sicherungsring (**99**) eingefügt ist, der an seinem Aussenumfang einen Überhang (**991**) aufweist, welchen das Rastorgan (**111**) zur axialen Sicherung des Handgriffs (**1**) auf der Aussenhülse (**2**) unterfasst.

10. Ventil nach mindestens einem der Ansprüche 1 bis 9, **dadurch gekennzeichnet, dass** die Innenprofilierung (**27**) und die Aussenprofilierung (**20**) an der Aussenhülse (**2**) sowie die Aussenprofilierung (**30**) am Mitnahmeelement (**3**) Längsverzahnungen sind.

11. Ventil nach mindestens einem der Ansprüche 1 bis 10, **dadurch gekennzeichnet, dass**
a) die Hauptdichtung (**89**) aus einem im Paket aneinander angeordneten Bauteilen besteht, nämlich einer fünften Dichtung (**85**), einer zweiten Scheibe (**94**), einer sechsten Dichtung (**86**) und einer dritten Scheibe (**95**); und
b) die fünfte Dichtung (**85**) auf einer im Innenstutzen (**67**) des Kopfstücks (**6**) liegenden Ringschulter (**672**) aufsitzt und gegen die dritte Scheibe (**95**) ein erster Sicherungsring (**98**) in eine innere Radialnut (**671**) im Innenstutzen (**67**) eingesetzt ist.

12. Ventil nach mindestens einem der Ansprüche 1 bis 10, **dadurch gekennzeichnet, dass**
a) die Hauptdichtung (**89**) aus einem im Paket aneinander angeordneten Bauteilen besteht, nämlich einer fünften Dichtung (**85**), einer zweiten Scheibe (**94**), einer sechsten Dichtung (**86**); und
b) die fünfte Dichtung (**85**) auf einer im Kopfstück (**6**) liegenden Ringschulter (**672**) aufsitzt und gegen die sechste Dichtung (**86**) ein erster Sicherungsring (**98'**) auf eine innere Ringschulter (**612**) im Kopfstück (**6**) gesetzt ist.

13. Ventil nach mindestens einem der Ansprüche 1 bis 12, **dadurch gekennzeichnet, dass**
a) der Aussenstutzen (**61,62,63**) des Kopfstücks (**6**) sich aus einem oberen Stutzen (**61**), einem daran anschliessenden, im Aussendurchmesser vergrösserten Flansch (**62**) und einem an letzteren ansetzenden Zwischenstutzen (**63**) einteilig zusammensetzt;
b) der obere Stutzen (**61**) aussen eine Aussenprofilierung (**60**), z.B. einen Sechskant zum Ansetzen eines Schraubenschlüssels, und intern ein Innengewinde (**618**) zur Aufnahme der Zwischenhülse (**5'**) oder eines Gewinderings (**5**) besitzt;
c) eine in das Kopfstück (**6**) weisende Unterkante des Gewinderings (**5**) auf einem im Aussendurchmesser verdickten Bund (**26**) der Aussenhülse (**2**) aufsitzt und somit die Aussenhülse (**2**) im Kopfstück (**6**) bei drehbarer Lagerung axial fixiert;
d) der Flansch (**62**) im montierten Zustand zum Aufsetzen auf den Ventilkörper bestimmt ist; und
e) der Zwischenstutzen (**63**) ein Aussengewinde (**630**) hat, das dem Einschrauben des Oberteils in den Ventilkörper dient.

14. Ventil nach mindestens einem der Ansprüche 4 und 13, **dadurch gekennzeichnet, dass** zumindest ein radial durch Öffnungen (**260,261**) im Bund (**26**) der Aussenhülse (**2**) eingebrachtes Arretierelement (**29**) vorgesehen ist, das in die Zwischenhülse (**5'**) axial sichernd in eine Radialnut (**57'**) eingreift.

15. Ventil nach mindestens einem der Ansprüche 1 bis 14, **dadurch gekennzeichnet, dass**
a) der Stössel (**8**) aus Chromstahl besteht und über seinen langgestreckten Mittelabschnitt (**40**) von rundem Querschnitt ist;
b) vom Mittelabschnitt (**40**) über eine erste Radialschulter (**44**) zum ersten Fortsatz (**41**), von hier über eine zweite Radialschulter (**45**) zum zweiten Fortsatz (**42**) und von hier über eine dritte Radialschulter (**46**) zum oberen Zapfen (**43**), die Aussendurchmesser jeweils vermindert sind; und
c) der Stössel (**8**) am zur ersten Dichtung (**81**) gerichteten Ende, im Anschluss an den Mittelabschnitt (**40**) einen Hinterschnitt (**48**) haben kann, dem ein nicht-rotationssymmetrisches Zwischensegment (**47**), z.B. mit Abflachungen (**470**), für die Aufnahme des Ventiltellers (**7**) folgt, an das sich ein unterer Zapfen (**49**) mit einem Aussengewinde (**490**) zum Aufschrauben einer ersten Mutter (**91**) anschliesst, wodurch der die erste Dichtung (**81**) tragende Ventilteller (**7**) gesichert ist.

16. Ventil nach mindestens einem der Ansprüche 1 bis 15, **dadurch gekennzeichnet, dass** der Ventilteller (**7**)
a) einen zum Querschnitt des Zwischensegments (**47**) des Stössels (**4**) formschlüssigen Axialdurchgang (**79**), z.B. mit Abflachungen (**790**), hat;
b) an der der ersten Dichtung (**81**) zugewandten Seite eine Profilierung (**70**) und eine den Axialdurchgang (**79**) vergrössernde Erweiterung (**72**) aufweisen kann, die von einem erhabenen Rand (**71**) begrenzt ist;
c) die erste Dichtung (**81**) eine dem Ventilteller (**7**) zugewandte Profilierung (**810**) besitzt, die mit der Profilierung (**70**) am Ventilteller (**7**) zusammenwirkt; und
d) die optionale Erweiterung (**72**) zur Aufnahme einer zweiten Dichtung (**82**) bestimmt ist, die den Stössel (**4**) umgibt.
